# FASCICULE DE BREVET EUROPEEN

(11) **EP 0 451 074 B1**
(45) Date de publication et mention de la délivrance du brevet: **28.12.1994**
(21) Numéro de dépôt: 91440025.4
(22) Date de dépôt: 03.04.1991
(51) Int. Cl.: A01D 34/66, A01B 73/02

(54) **Faucheuse à châssis perfectionné**
Mähmaschine mit verbessertem Tragrahmen
Mower with improved frame

(30) Priorité: 05.04.1990 FR 9004694
(43) Date de publication de la demande: 09.10.1991
(73) Titulaire: KUHN S.A., F-67700 Saverne (FR)
(72) Inventeur: Wolff, Michel, Waltenheim-sur-Zorn, F-67670 Mommenheim (FR)

(56) Documents cités:
- EP-A- 0 356 358
- EP-A- 0 361 573

## Description

La présente invention concerne une faucheuse destinée à être accouplée à un véhicule moteur.

Dans une première alternative, ladite faucheuse comporte :
- un châssis,
- au moins un groupe de fauche lié audit châssis au moyen d'une articulation, et
- un organe de manoeuvre associé audit groupe de fauche et prévu pour déplacer celui-ci d'une position de travail où il s'étend pour l'essentiel latéralement à la voie du véhicule moteur et transversalement à la direction d'avance au travail, dans une position de transport où il s'étend vers le haut, par pivotement autour de l'axe de ladite articulation,
ledit châssis comprenant :
- un organe d'accouplement permettant d'accoupler la faucheuse au véhicule moteur,
- une poutre-support associée audit groupe de fauche et à l'extrémité extérieure de laquelle ce dernier est lié au moyen de ladite articulation,
- deux organes de liaison associés audit groupe de fauche et liés chacun à l'organe d'accouplement au moyen d'une première articulation et à la poutre-support correspondante au moyen d'une deuxième articulation,
et
- un dispositif de commande agissant sur la structure déformable formée par l'organe d'accouplement, ladite poutre-support et lesdits deux organes de liaison, pour déformer celle-ci de telle manière que pour le transport le groupe de fauche puisse en sus être déplacé transversalement vers l'axe médian du véhicule moteur, et vice versa.

Dans une seconde alternative, l'organe de manoeuvre précité est formé par un deuxième vérin hydraulique lié d'une part directement ou indirectement au groupe de fauche et d'autre part à la poutre support, et dont la longueur varie proportionnellement au pivotement du groupe de fauche autour de l'axe de l'articulation liant ce dernier au châssis.

Une telle faucheuse est décrite dans la FR-A-2 635 433. Elle comporte un châssis par l'intermédiaire duquel elle peut être liée à un véhicule tracteur, et un groupe de fauche qui est lié audit châssis au moyen d'une articulation du type pivot d'axe géométrique dirigé au moins sensiblement suivant la direction d'avance au travail. Elle comporte par ailleurs un organe de manoeuvre réalisé sous forme de vérin hydraulique de manoeuvre s'étendant entre le châssis et le groupe de fauche dans le but de déplacer le groupe de fauche d'une position de travail où ledit groupe de fauche s'étend latéralement à côté de la voie du véhicule tracteur et transversalement à la direction d'avance au travail, dans une position de transport où ledit groupe de fauche s'étend vers le haut, par pivotement autour de ladite articulation.

Le châssis est muni d'un organe d'accouplement destiné à être lié au dispositif d'accouplement du véhicule tracteur. Il comporte par ailleurs une poutre-support liée à l'organe d'accouplement au moyen de deux organes de liaison dont chacun est lié respectivement à l'organe d'accouplement au moyen d'une première articulation et à la poutre-support au moyen d'une deuxième articulation.

Le groupe de fauche est lié à l'extrémité extérieure de la poutre-support au moyen de l'articulation d'axe géométrique dirigé suivant la direction d'avance au travail. A l'autre extrémité de la poutre-support, est agencé l'un desdits organes de liaison qui a été réalisé sous forme d'organe-support par l'intermédiaire duquel l'organe d'accouplement supporte la poutre-support et le groupe de fauche. L'autre organe de liaison s'étend dans une zone située entre le groupe de fauche et l'organe-support et est réalisé sous forme de tirant de sécurité.

L'organe d'accouplement, la poutre-support et les deux organes de liaison forment une structure déformable transversalement à la direction d'avance au travail, de telle sorte que pour le transport le groupe de fauche puisse en sus être approché de l'axe médian du véhicule tracteur. Grâce à cela, la largeur hors-tout de l'ensemble véhicule tracteur/faucheuse est plus réduite. Par ailleurs, le centre de gravité de la faucheuse s'étend plus près de l'axe médian du véhicule tracteur, ce qui sollicite moins le châssis de la faucheuse et le dispositif d'accouplement du véhicule tracteur et déleste moins les roues du véhicule tracteur s'étendant du côté opposé à celui où s'étend le groupe de fauche.

Dans la faucheuse connue, le déplacement du groupe de fauche vers l'axe médian du véhicule tracteur se fait simultanément au pivotement du groupe de fauche de la position de travail dans la position de transport. A cet effet, il est prévu une barre de commande liée d'une part à l'organe d'accouplement ou à l'organe de liaison constituant l'organe-support au moyen d'une première articulation sphérique et d'autre part au groupe de fauche au moyen d'une deuxième articulation sphérique. En pivotant ainsi le groupe de fauche vers le haut au moyen du vérin hydraulique de manoeuvre, le groupe de fauche exerce une action sur la barre de commande qui provoque la déformation de la structure déformable vers l'axe médian du véhicule tracteur.

Dans la faucheuse connue, il est enfin encore prévu que l'organe de liaison situé le plus près du groupe de fauche ait une longueur supérieure à l'autre organe de liaison et soit, en position de travail, fortement incliné vers le groupe de fauche. Cette caractéristique est particulièrement intéressante lorsque le groupe de fauche est muni d'un protecteur. Un tel protecteur est en effet nécessaire lorsque le groupe de fauche risque de projeter des pierres par exemple. Or ce protecteur, pour répondre aux normes en vigueur, possède en général des dimensions relativement importantes, de sorte que lors de la mise en position de transport du groupe de fauche, il pourrait apparaître des problèmes d'interférence avec les roues du véhicule tracteur. Mais ces problèmes sont éliminés avec la caractéristique ci-dessus, étant donné que lors du déplacement du groupe de fauche en direction de l'axe médian du véhicule tracteur, ledit groupe de fauche s'éloigne également suffisamment du véhicule tracteur pour que le protecteur puisse au moins partiellement s'étendre dans le sillage de la roue du véhicule tracteur s'étendant dans le voisinage du groupe de fauche.

Bien que la faucheuse connue soit dotée de nombreuses caractéristiques très intéressantes, il est apparu que la réalisation pouvait, dans certains cas, présenter quelque inconvénient.

La présente invention a pour but de remédier à cela, tout en conservant les avantages de ladite faucheuse connue.

A cet effet, il est prévu dans la faucheuse selon la présente invention que le dispositif de commande comporte un premier vérin hydraulique agissant directement ou indirectement sur la structure déformable et étant en liaison hydraulique :
- avec un deuxième vérin hydraulique lié d'une part directement ou indirectement au groupe de fauche et d'autre part à la poutre support, et dont la longueur varie proportionnellement au pivotement dudit groupe de fauche autour de l'axe de l'articulation liant le groupe de fauche à la poutre-support (première alternative)
ou
- avec le deuxième vérin hydraulique (seconde alternative).

Le premier vérin à fluide qui agit directement ou indirectement sur la structure déformable, peut être très facilement placé à un endroit où il ne risque pas d'interférer avec un autre organe de la faucheuse.

Dans l'invention, il pourra être prévu que le premier vérin soit branché en série avec le deuxième vérin.

Ce premier vérin pourra être un vérin double effet. Dans ce cas, il pourra être prévu dans la seconde alternative, que le deuxième vérin soit un vérin simple effet et que l'une des chambres du premier vérin soit reliée à une source hydraulique sous pression. Dans la première alternative, il pourrait être prévu que le deuxième vérin soit aussi un vérin double effet et que le premier vérin et le deuxième vérin soient branchés en circuit fermé.

Mais ce premier vérin pourrait également être un vérin simple effet agissant sur la structure déformable dans un sens. Il conviendra alors de prévoir également un moyen de commande pour agir sur la structure déformable dans l'autre sens. Dans ce cas, le deuxième vérin pourra être un vérin simple effet branché en circuit fermé avec le premier vérin dans la première alternative ou un vérin double effet dont l'une des chambres serait reliée à une source hydraulique sous pression dans la seconde alternative. Le moyen de commande, prévu pour agir sur la structure déformable dans l'autre sens, sera avantageusement constitué par un organe élastiquement déformable.

Dans toutes ces formes de réalisation de l'invention, la déformation de la structure déformable soit dans un sens soit dans l'autre sens, se fera simultanément au pivotement du groupe de fauche de la position de travail dans la position de transport, respectivement de la position de transport dans la position de travail.

Dans la seconde alternative, il pourrait être prévu que le deuxième vérin soit un vérin simple effet, que le premier vérin soit également un vérin simple effet qui est branché en parallèle avec le deuxième vérin et qui agit directement ou indirectement sur la structure déformable dans un sens, et qu'enfin il soit prévu un moyen de commande pour agir directement ou indirectement sur ladite structure déformable dans l'autre sens. Dans ce cas, ledit moyen de commande pourra également avantageusement être constitué par un organe élastiquement déformable. Dans ce cas, il pourra également avantageusement être prévu, lorsque le groupe de fauche s'étend relativement près du véhicule moteur, que lors de la mise en position de transport, ce soit d'abord la structure déformable qui soit déformée avant le pivotement du groupe de fauche de la position de travail dans la position de transport. De même, lors de la mise en position de travail, il pourra avantageusement être prévu que ce soit d'abord le groupe de fauche qui soit pivoté de la position de transport dans la position de travail avant que la structure déformable ne soit déformée. Ceci évite des interférences entre le protecteur dont est équipée la faucheuse et le véhicule moteur.

Il pourra cependant aussi être prévu que la déformation de la structure déformable se fasse simultanément au pivotement du groupe de fauche de la position de travail dans la position de transport, respectivement de la position de transport dans la position de travail. A cet effet, il sera prévu que les deux vérins soient branchés sur une source hydraulique sous pression au travers d'un diviseur de débit.

Un autre grand avantage de l'invention réside dans le fait qu'il y a au plus un branchement hydraulique à une source hydraulique sous pression généralement constituée par la centrale hydraulique du véhicule moteur.

Du reste, il pourra être très facilement prévu dans la faucheuse de l'invention, que la structure déformable ne se déforme pas durant le travail lorsque le groupe de fauche pivote quelque peu autour de l'articulation le liant à la poutre-support pour s'adapter au relief du sol. Dans une réalisation préférée, il sera prévu que le deuxième vérin soit lié au groupe de fauche au moyen d'un élément de liaison permettant, au travail, un certain pivotement du groupe de fauche autour de l'articulation liant celui-ci à la poutre-support, sans influence sur la déformation de la structure déformable.

Durant le travail, le groupe de fauche glisse sur le sol. Dans certains cas, il pourra être souhaité que les efforts engendrés par ce glissement n'aient pas d'influence sur la structure déformable. A cet effet, il est prévu qu'en position de travail la déformation de la structure déformable soit verrouillée positivement par un premier organe de verrouillage.

Lorsqu'au travail le premier vérin présente une chambre sous pression, cet organe de verrouillage pourra être avantageusement constituée par un clapet anti-retour qui empêche l'huile de sortir de cette chambre sous pression du premier vérin et dont l'action peut être annulée. Si le premier vérin est un vérin double effet, l'action de ce clapet anti-retour pourra être très facilement annulée, dès lors où celui-ci est un clapet anti-retour piloté par la pression régnant dans la conduite branchée sur l'autre chambre du premier vérin.

En position de transport, il est prévu, selon une caractéristique supplémentaire de l'invention, que la déformation de la structure déformable soit verrouillée positivement par un deuxième organe de verrouillage.

Avantageusement, ce deuxième organe de verrouillage pourra agir sur la conduite branchée sur la chambre du premier vérin qui est pleine au transport, de sorte à empêcher, au transport, l'huile de sortir de ladite chambre, l'action de ce deuxième organe de verrouillage pouvant être annulée. Cet organe de verrouillage sera prévu directement à l'entrée de ladite chambre du premier vérin pleine au transport ou, en tout cas, entre ladite chambre du premier vérin et la conduite flexible branchée sur celle-ci. Ainsi, même en cas de défaillance de ladite conduite flexible, la structure déformable ne pourra pas se déplier durant le transport.

Lorsque le premier vérin est un vérin double effet, il pourra être avantageusement prévu que ledit organe de verrouillage comporte d'une part un clapet anti-retour sur la conduite branchée sur la chambre du premier vérin qui est pleine au transport, l'ouverture dudit clapet anti-retour étant pilotée par la pression régnant dans la conduite branchée sur l'autre chambre du premier vérin, et d'autre part un verrou mécanique verrouillant le pivotement du groupe de fauche par rapport à la poutre-support, lorsque celui-ci est en position de transport.

Quand le deuxième vérin est un vérin simple effet et constitue l'organe de manoeuvre destiné à déplacer le groupe de fauche de la position de travail, vers le haut, dans la position de transport, on comprendra que le pivotement du groupe de fauche de la position de transport, vers le bas, dans la position de travail, se fait essentiellement grâce au poids du groupe de fauche. A cet effet, il peut être avantageusement prévu qu'un organe élastiquement déformable amorce le mouvement de descente du groupe de fauche lors du passage de la position de transport dans la position de travail.

Une réalisation particulièrement avantageuse est obtenue lorsque le premier vérin s'étend entre l'organe d'accouplement et l'un des organes de liaison.

Préférentiellement, il sera prévu que l'un des organes de liaison constitue l'organe-support par l'intermédiaire duquel l'organe d'accouplement supporte la poutre-support et le groupe de fauche. L'autre organe de liaison sera alors réalisé sous forme d'organe de déclenchement et le premier vérin sera lié d'une part à l'organe d'accouplement et d'autre part à l'organe-support. Ainsi, lorsque le groupe de fauche accroche accidentellement un obstacle au cours du travail, ledit groupe de fauche et la poutre-support exercent un effort sur ledit organe de déclenchement qui déclenchera, lorsque le seuil de déclenchement est atteint. A ce moment, l'ensemble groupe de fauche/poutre-support pourra se déplacer par rapport à l'organe d'accouplement en pivotant autour de l'articulation liant l'organe-support à la poutre-support, évitant ainsi d'endommager le groupe de fauche. Ce déplacement pourra s'opérer sans que la longueur du premier vérin varie, étant donné que celui-ci s'étend entre l'organe d'accouplement et l'organe de liaison constituant l'organe-support.

Dans une réalisation préférentielle, l'organe-support est lié à l'extrémité de la poutre-support opposée à celle où est lié le groupe de fauche, tandis que l'autre organe de liaison s'étend dans une zone entre ledit organe-support et le groupe de fauche et est formé par un tirant de sécurité dont la longueur est susceptible d'augmenter à partir d'un certain effort de traction appliqué à ses extrémités.

L'invention sera mieux comprise grâce à la description suivante de quelques exemples non limitatifs de réalisation faite en référence au dessin annexé sur lequel :
- la figure 1 représente, en position de travail, une faucheuse selon l'invention vue de l'arrière dans le sens d'avance au travail et liée à un véhicule moteur,
- la figure 2 représente une vue de dessus de la faucheuse de la figure 1 toujours en position de travail,
- la figure 3 représente une vue de dessus de la faucheuse des figures 1 et 2 en position de transport,
- la figure 4 représente, à une échelle agrandie, une vue en coupe de l'organe de liaison constituant l'organe-support de la poutre-support et du groupe de fauche, la coupe étant réalisée suivant le plan de symétrie vertical IV-IV, défini sur la figure 2, dudit organe de liaison lorsque celui-ci est, en vue de dessus, orthogonal à l'axe longitudinal de la poutre-support,
- la figure 5 représente le schéma du circuit hydraulique lorsque le groupe de fauche est en position de travail telle que représentée sur les figures 1 et 2,
- la figure 6 représente le schéma du circuit hydraulique lorsque le groupe de fauche est en position de transport telle que représentée sur la figure 3,
- la figure 7 représente schématiquement un deuxième exemple de réalisation, le groupe de fauche étant en position de travail,
- la figure 8 représente le deuxième exemple de réalisation dans lequel le groupe de fauche est dans la position de transport,
- la figure 9 représente schématiquement un troisième exemple de réalisation, le groupe de fauche étant en position de travail,
- la figure 10 représente le troisième exemple de réalisation dans lequel le groupe de fauche est dans la position de transport,
- la figure 11 représente schématiquement un quatrième exemple de réalisation, le groupe de fauche étant en position de travail, et
- la figure 12 représente le quatrième exemple de réalisation dans lequel le groupe de fauche est dans la position de transport.

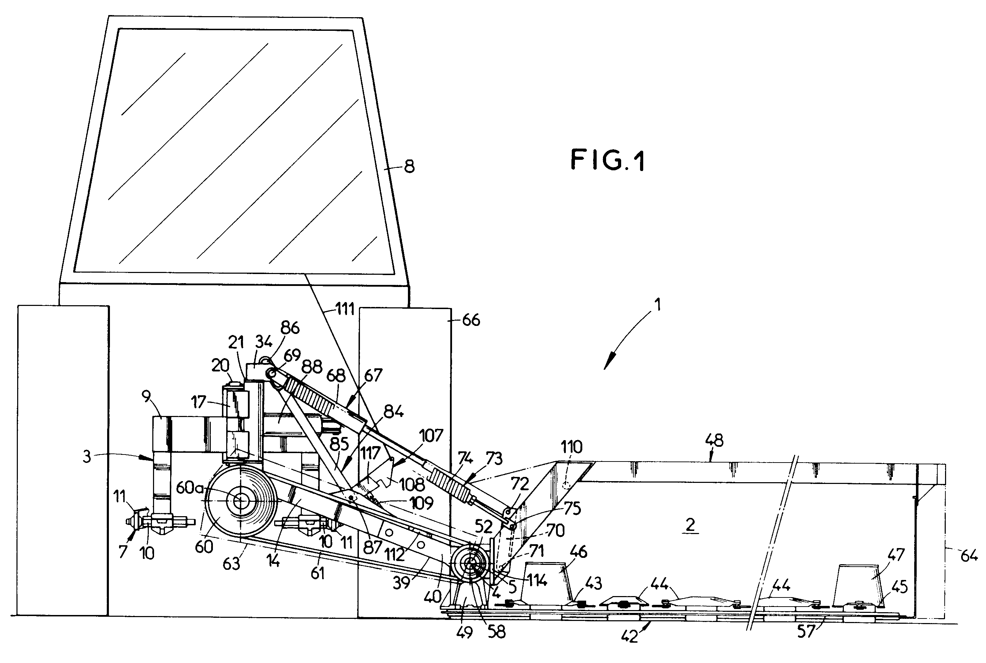

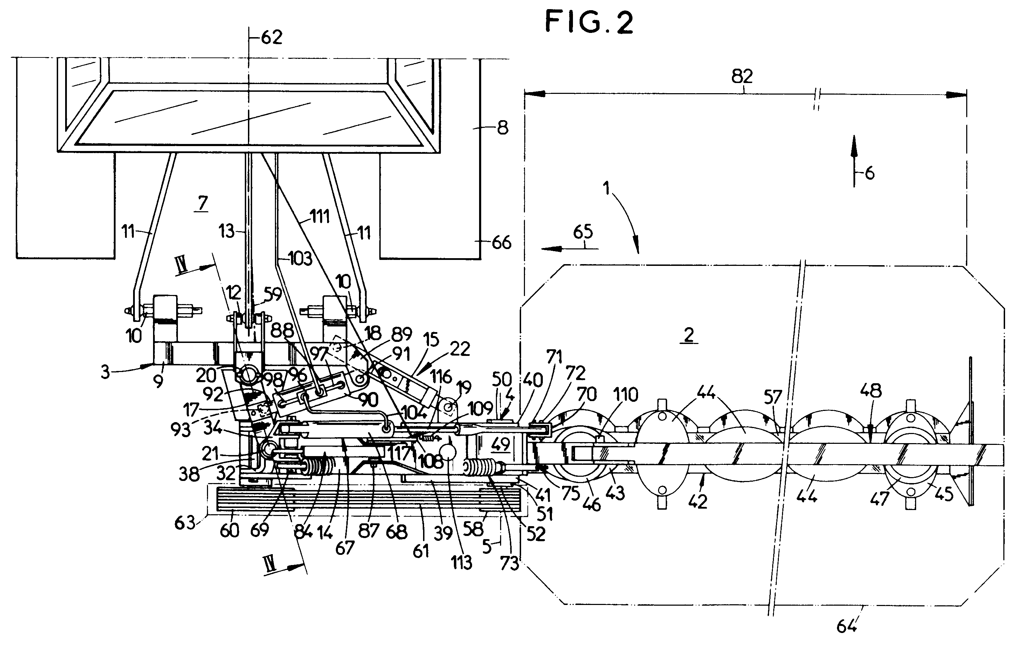

La faucheuse (1), telle que représentée sur les figures 1 à 6, comporte un groupe de fauche (2) et un châssis (3). Le groupe de fauche (2) est lié au châssis (3) au moyen d'une articulation (4) du type pivot d'axe géométrique (5) dirigé au moins sensiblement suivant la direction d'avance (6) au travail (figure 2) lorsque le groupe de fauche (2) est en position travail.

Au travail, la faucheuse (1) est attelée au dispositif d'accouplement (7) d'un véhicule-moteur (8) de telle sorte que le groupe de fauche (2) s'étende, vu suivant la direction d'avance (6) au travail, latéralement à côté de la voie dudit véhicule-moteur (8) et transversalement à la direction d'avance (6) au travail. A cet effet, le châssis (3) est muni d'un organe d'accouplement (9) destiné à être lié au dispositif d'accouplement (7) du véhicule-moteur (8). Cet organe d'accouplement (9) comporte deux points d'attelage inférieurs (10) adaptés pour être liés aux deux bras inférieurs (11) du dispositif d'accouplement (7), et un point d'attelage supérieur (12) adapté pour être lié à la bielle supérieure (13) dudit dispositif d'accouplement (7).

Le châssis (3) comporte par ailleurs une poutre-support (14) liée à l'organe d'accouplement (9) au moyen d'un premier organe de liaison (15) et d'un deuxième organe de liaison (17). Le premier organe de liaison (15) est lié à l'organe d'accouplement (9) au moyen d'une première articulation (18) et à la poutre-support (14) au moyen d'une deuxième articulation (19). Le deuxième organe de liaison (17) est également lié à l'organe d'accouplement (9) au moyen d'une première articulation (20) du type pivot d'axe géométrique (20′) et à la poutre-support (14) au moyen d'une deuxième articulation (21) du type pivot d'axe géométrique (21′). Ces axes géométriques (20′, 21′) sont dirigés vers le haut et sont parallèles entre eux. Au travail notamment, ces axes géométriques (20′, 21′) s'étendent au moins sensiblement verticalement. Les articulations (18, 19) du premier organe de liaison (15) sont, quant à elles, du type rotule. De cette sorte, le premier organe de liaison (15), le deuxième organe de liaison (17), l'organe d'accouplement (9) et la poutre-support (14) forment une structure (22) déformable dans un plan au moins sensiblement horizontal.

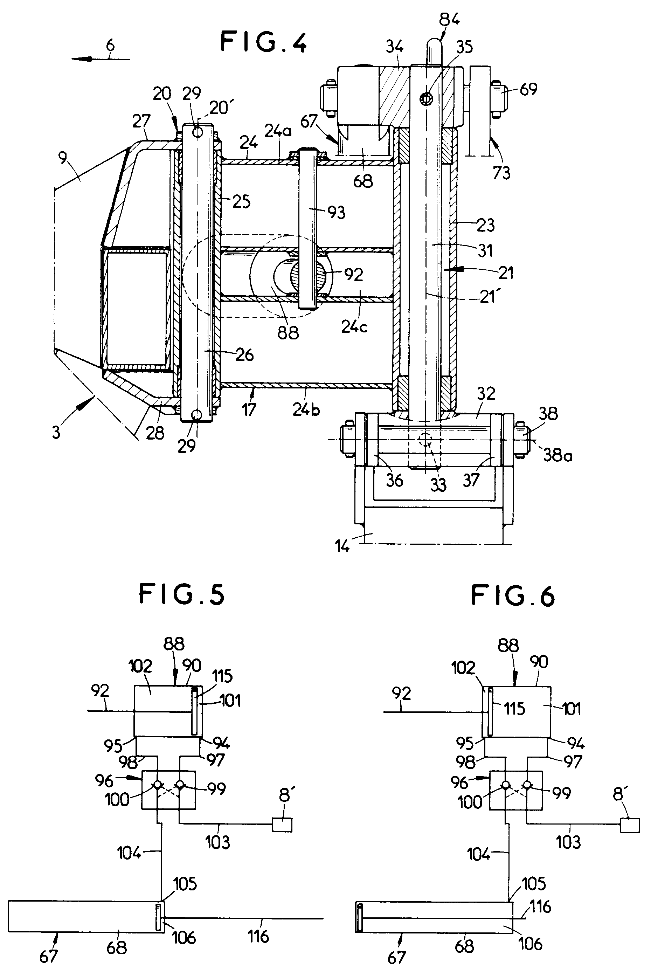

Le deuxième organe de liaison (17) qui est agencé à l'extrémité de la poutre-support (14) éloignée du groupe de fauche (2), est représenté plus en détail sur la figure 4. Cet organe de liaison (17) comprend notammment deux organes tubulaires (23, 25) et un bras-support (24) s'étendant entre ces deux organes tubulaires (23, 25) auxquels il est soudé. Ce bras-support (24) est constitué par deux longerons (24a, 24b) disposés l'un au-dessus de l'autre de sorte à ménager un espace (24c) entre eux. L'organe tubulaire (25) avant s'étend entre les deux ailes (27, 28) d'une chape solidaire de l'organe d'accouplement (9) et est lié à celle-ci au moyen d'un axe (26). Cet axe (26) est, d'une part, guidé en rotation dans l'organe tubulaire avant (25) et, d'autre part, lié en rotation et en translation aux ailes (27, 28) au moyen de deux goupilles (29) traversant chacune une aile (27, 28) respective. Cet axe (26) et l'organe tubulaire avant (25) constituent la première articulation pivot (20) dont l'axe géométrique (20') est défini par l'axe géométrique longitudinal de l'axe (26). Dans l'organe tubulaire arrière (23) est guidé en rotation un axe (31) qui est lié rigidement, d'une part à son extrémité inférieure dépassant de l'organe tubulaire arrière (23) à une chape (32) au moyen d'une goupille (33) et, d'autre part, à son extrémité supérieure dépassant de l'organe tubulaire arrière (23) à un organe d'accrochage (34) au moyen d'une goupille (35). L'organe tubulaire arrière (23) et l'axe (31) constituent la deuxième articulation pivot (21) dont l'axe géométrique (21') est défini par l'axe géométrique longitudinal de l'axe (31).

De part et d'autre des deux ailes (36, 37) de la chape (32) s'étend l'extrémité de la poutre-support (14) éloignée du groupe de fauche (2). La poutre-support (14) est liée à cette chape (32) au moyen d'un axe (38) dont l'axe géométrique longitudinal (38a) est, au travail, au moins sensiblement dirigé suivant la direction d'avance (6) au travail. La poutre-support (14) est ainsi capable de pivoter quelque peu dans un plan au moins sensiblement vertical ce qui contribue à une bonne adaptation du groupe de fauche (2) à la configuration du terrain à faucher. C'est à cet effet que les articulations (18, 19) liant le premier organe de liaison (15) à l'organe d'accouplement (9), respectivement à la poutre-support (14), sont des articulations du type rotule ou analogue, tel que pivot avec jeu. Sur la figure 4, il apparaît ainsi clairement que l'organe de liaison (17) constitue l'organe-support par l'intermédiaire duquel l'organe d'accouplement (9) supporte la poutre-support (14).

A son extrémité située dans le voisinage du groupe de fauche (2), la poutre-support (14) est liée à ce groupe de fauche (2) au moyen de l'articulation (4) d'axe géométrique (5) dirigé, au travail, au moins sensiblement suivant la direction d'avance (6) au travail.

Le premier organe de liaison (15), réalisé sous forme de tirant, est agencé entre le deuxième organe de liaison (17) et l'extrémité de la poutre-support (14) où est lié le groupe de fauche (2). Avantageusement, le tirant formant le premier organe de liaison (15) est constitué par un tirant de sécurité dont la longueur est susceptible d'augmenter à partir d'un certain effort de traction exercé à ses extrémités. Un tel tirant de sécurité est connu de l'homme de l'art et ne sera donc pas décrit plus en détail. Grâce à ce tirant de sécurité, le groupe de fauche (2) pourra se déplacer par rapport à l'organe d'accouplement (9) au cas où il accrocherait un obstacle pendant le travail. On évite ainsi d'endommager la faucheuse (1).

Il apparaît par ailleurs que la longueur de ce premier organe de liaison (15) est supérieure à la longueur du deuxième organe de liaison (17) et qu'en position de travail, ce premier organe de liaison (15) est fortement incliné en direction du côté où s'étend le groupe de fauche (2). Le deuxième organe de liaison (17), quant à lui, s'étend, en position de travail, pratiquement suivant la direction d'avance (6) au travail.

Comme dit ci-avant, le groupe de fauche (2) est lié à la poutre-support (14) au moyen de l'articulation (4) d'axe géométrique (5) dirigé, au travail, au moins sensiblement suivant la direction d'avance (6) au travail. A cet effet, la poutre-support (14) est munie d'une chape (39) entre les ailes (40, 41) de laquelle peut pivoter le groupe de fauche (2) d'une manière qui sera décrite ci-après.

Ce groupe de fauche (2) comporte une barre de coupe (42) munie d'organes de coupe (43, 44, 45). Dans l'exemple représenté, ces organes de coupes (43, 44, 45) sont constitués par des disques munis à leur périphérie d'outils de coupe et tournant autour d'axes géométriques dirigés vers le haut. Les organes de coupe (43, 45) s'étendant chacun à une extrémité de la barre de coupe (42), sont surmontés par un rotor (46, 47) qui tourne autour du même axe géométrique que l'organe de coupe (43, 45) qu'il surmonte.

Le groupe de fauche (2) comporte par ailleurs une structure porteuse (48) qui est liée aux deux extrémités de la barre de coupe (42) d'une manière quine sera pas décrite en détail, car le principe est connu de l'homme de l'art.

A l'extrémité de la barre de coupe (42) s'étendant en regard de la poutre-support (14), ladite barre de coupe (42) est munie d'un carter de renvoi (49). Ce carter de renvoi (49) remplit une double fonction. C'est en effet tout d'abord par son intermédiaire que le groupe de fauche (2) est lié à la poutre-support (14). Il contient ensuite une partie des organes d'entraînement entraînant les organes de coupe (43, 44, 45) et les rotors (46, 47). Le carter de renvoi (49) comporte en effet tout d'abord deux portées cylindriques (50, 51) susceptibles de tourner dans les ailes (40, 41) de la chape (39) de la poutre-support (14). Ces portées cylindriques (50, 51) et les ailes (40, 41) de la chape (39) constituent ainsi l'articulation (4). Ces portées cylindriques (50, 51) sont, d'une manière connue de l'homme de l'art, réalisées sous forme de paliers dans lesquels est guidé en rotation un arbre d'entrée (52) dont l'axe de rotation est confondu avec l'axe géométrique (5) de l'articulation (4). A l'intérieur du carter de renvoi (49) l'arbre d'entrée (52) est, d'une manière connue, lié en rotation à des organes d'entraînement (non représentés). Ceux-ci transmettent le mouvement à des organes d'entraînement supplémentaires (non réprésentés) connus de l'homme de l'art et s'étendant à l'intérieur d'un carter (57) que comporte la barre de coupe (42).

A l'arrière, l'arbre d'entrée (52) s'étend au-dehors du carter de renvoi (49) et est lié en rotation à une poulie (58). Cette poulie (58) fait partie des organes de transmission de la faucheuse (1) qui transmettent le mouvement depuis la prise de force (non représentée) du véhicule-moteur (8) jusqu'aux organes d'entraînement du groupe de fauche (2). Ces organes de transmission comportent par ailleurs un arbre de transmission à joints universels (59), une poulie (60) et un élément de transmission sans fin (61). L'arbre de transmission (59) est lié en rotation à la poulie (60) fixée à la poutre-support (14) et ayant un axe de rotation (60a) dirigé au moins sensiblement suivant la direction d'avance (6) au travail lorsque la faucheuse (1) est en position de fauchage (figures 1 et 2). La transmission du mouvement de la poulie (60) à la poulie (58) est assurée par l'élément de transmission sans fin (61) qui s'enroule sur lesdites poulies (58, 60). Un capot de protection (63) (représenté en traits mixtes) entoure partiellement les poulies (58, 60) et l'organe de transmission sans fin (61).

Le groupe de fauche (2), quant à lui, est muni d'un dispositif de protection (64) (également représenté en traits mixtes) qui coiffe les organes de coupe (43, 44, 45). Comme visible sur la figure 2, ce dispositif de protection (64) s'étend, vu suivant la flèche (65) jusqu'au niveau de la partie arrière de la roue (66) du véhicule-moteur (8) la plus proche du groupe de fauche (2).

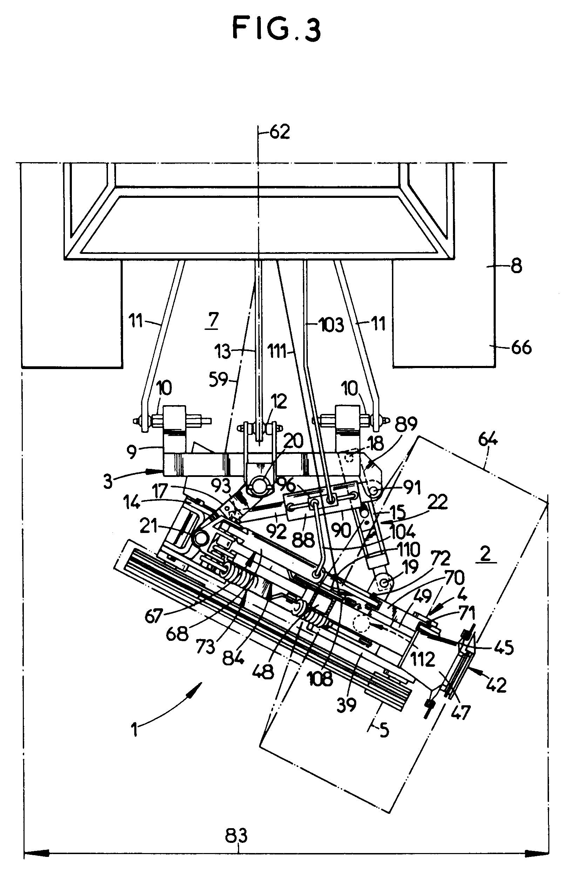

La faucheuse (1) comporte par ailleurs un organe de manoeuvre (67) qui permet de faire pivoter le groupe de fauche (2) autour de l'axe géométrique (5) de l'articulation pivot (4) pour l'amener dans une position de transport où il s'étend vers le haut (figure 3). Dans cet exemple de réalisation, cet organe de manoeuvre (67) est constitué par un vérin hydraulique simple effet (68). Ce vérin hydraulique (68) est lié à l'une de ses extrémités à l'organe d'accrochage (34) au moyen d'un axe (69) et à l'autre de ses extrémités au groupe de fauche (2) par l'intermédiaire d'un levier pivotant (70). Ce levier pivotant (70) est lié au groupe de fauche (2) par un axe (71) et au vérin hydraulique (68) par un axe (72).

La faucheuse (1) comporte aussi un organe de délestage (73) qui sert à alléger le groupe de fauche (2). Dans cet exemple de réalisation, cet organe de délestage (73) est un ressort de traction (74). Ce ressort de traction (74) est lié à l'une de ses extrémités à l'organe d'accrochage (34) au moyen de l'axe (69) et à l'autre de ses extrémités à la structure porteuse (48) au moyen d'un axe (75). Le ressort de traction (74) exerce ainsi un couple de rappel d'une part sur la poutre-support (14) autour de l'axe géométrique (38a) de l'axe (38) qui lie ladite poutre-support (14) à la chape (32), et d'autre part sur le groupe de fauche (2) autour de l'axe géométrique (5) de l'articulation (4) qui lie ledit groupe de fauche (2) à la poutre-support (14). Ces couples de rappel sont tels qu'au travail, une partie du poids de la poutre-support (14) et du groupe de fauche (2) est transférée sur le véhicule-moteur (8).

La faucheuse (1) comporte également un organe de limitation de débattement (84) limitant le pivotement possible de la poutre-support (14) par rapport au deuxième organe de liaison (17) autour de l'axe géométrique (38a) de l'axe (38). Cet organe de limitation de débattement (84) limite notamment le pivotement de la poutre-support (14) vers le bas autour dudit axe géométrique (38a). Dans cet exemple de réalisation, cet organe de limitation de débattement (84) est réalisé sous forme d'un tirant (85) muni d'un trou oblong (86). Ce tirant (85) est lié à l'une de ses extrémités à l'organe d'accrochage (34) au moyen de l'axe (69) qui traverse le trou oblong (86), et à l'autre de ses extrémités à la poutre-support (14) au moyen d'un axe (87).

La faucheuse (1) comporte encore un vérin hydraulique double effet (88) destiné à agir sur la structure déformable (22) formée par l'organe d'accouplement (9), la poutre-support (14) et les deux organes de liaison (15, 17). A cet effet, l'organe d'accouplement (9) est muni, du côté du groupe de fauche (2), d'une chape (89) à laquelle est lié le cylindre (90) du vérin hydraulique (88) au moyen d'un axe (91). L'extrémité de la tige (92) dudit vérin hydraulique (88) s'étend, quant à elle, dans l'espace (24c) entre les deux longerons (24a, 24b) du deuxième organe de liaison (17) auxquels elle est liée par un axe (93). Ce vérin hydraulique (88) étant un vérin double effet, il comporte deux orifices (94, 95) sur lesquels est branché un clapet anti-retour double piloté (96) à l'aide de conduites rigides (97, 98) respectives. Ce clapet anti-retour double piloté (96) comporte deux clapets anti-retour pilotés (99, 100) (figures 5 et 6), dont l'un (99) est situé sur la conduite (97) branchée sur l'orifice (94) de la chambre (101) du vérin (88) et dont l'autre (100) est situé sur la conduite (98) branchée sur l'orifice (95) de la chambre annulaire (102) dudit vérin (88). Une conduite flexible (103), branchée sur le clapet anti-retour piloté (99), est raccordée à la centrale hydraulique (8′) du véhicule-moteur (8), tandis qu'une autre conduite flexible (104), branchée sur le clapet anti-retour piloté (100), est raccordée à l'orifice (105) de la chambre annulaire (106) du vérin hydraulique (68). Le premier vérin hydraulique (88) et le deuxième vérin hydraulique (68) sont ainsi branchés en série.

La faucheuse (1) comporte encore un organe de verrouillage (107) condamnant le pivotement du groupe de fauche (2) par rapport à la poutre-support (14) lorsque ledit groupe de fauche (2) est en position de transport. Cet organe de verrouillage (107) comporte un loquet (108) monté pivotant sur la poutre-support (14) au moyen de l'axe (87) par l'intermédiaire duquel l'organe de limitation de débattement (84) est lié à la poutre-support (14).

Le pivotement du loquet (108) se fait à l'encontre d'un ressort de traction (109) agissant entre la poutresupport (14) et ledit loquet (108). La structure porteuse (48) du groupe de fauche (2), quant à elle, est munie d'un doigt (110) auquel s'accroche le loquet (108) lorsque le groupe de fauche (2) est en position de transport. Un organe de traction (111), réalisé sous forme de cordelette, permet le déverrouillage du loquet (108) à partir du véhicule-moteur (8).

La faucheuse (1) comporte enfin encore un organe élastiquement déformable (112) qui est réalisé sous forme de butée (113) en caoutchouc fixée sur la poutre-support (14). A la fin de la mise en position de transport du groupe de fauche (2), la structure porteuse (48) comprime quelque peu ladite butée (113), de telle sorte que celle-ci soit capable, lors du déplacement du groupe de fauche (2) de la position de transport vers la position de travail, de débuter ce mouvement.

La faucheuse (1) des figures 1 à 6 qui vient d'être décrite, fonctionne de la manière suivante.

La faucheuse est attelée au dispositif d'accouplement (7) d'un véhicule-moteur (8) par l'intermédiaire de son organe d'accouplement (9) et l'arbre de transmission à joints universels (59) est accouplé à la prise de force (non représentée) dudit véhicule-moteur (8).

Au travail, le groupe de fauche (2) s'étend dans sa position de travail telle que représentée sur les figures 1 et 2. Le véhicule-moteur (8) déplace la faucheuse (1) dans le sens d'avance (6) au travail et sa prise de force entraîne en rotation les organes de coupe (43, 44, 45) et les rotors (46, 47) par l'intermédiaire des organes de transmission (59, 60, 61, 58) et des divers organes d'entraînement logés dans le carter de renvoi (49) et le carter (57) de la barre de coupe (42).

En tournant, les organes de coupe (43, 44, 45) coupent le produit à récolter qui se trouve dans la zone de coupe (82) et les rotors (46, 47) calibrent l'andain de produit coupé déposé derrière le groupe de fauche (2).

Etant donné que la poutre-support (14) peut pivoter quelque peu autour de l'axe géométrique (38a) de l'axe (38) et que le groupe de fauche (2) peut pivoter autour de l'axe géométrique (5) de l'articulation (4) par rapport à la poutre-support (14), ledit groupe de fauche (2) peut bien suivre la configuration du terrain à faucher. L'organe de délestage (73), quant à lui, réduit la force avec laquelle le groupe de fauche (2) repose sur le sol.

Pour mettre la faucheuse (1) en position de transport (figure 3), on lève tout d'abord le dispositif d'accouplement (7) du véhicule-moteur (8), ce qui a pour effet de lever la faucheuse lorsque le pivotement de la poutre-support (14) vers le bas autour de l'axe géométrique (38a) de l'axe (38) est stoppé par l'organe de limitation de débattement (84) et que le levier pivotant (70) bute contre le carter de renvoi (49) qui comporte une face d'appui (114) prévue à cet effet. On actionne ensuite le distributeur (non représenté) de la centrale hydraulique (8′) du véhicule-moteur (8). Comme le clapet anti-retour piloté (100) n'est pas encore passant, l'huile contenue dans la conduite (103) monte en pression jusqu'à atteindre la pression qui va rendre ledit clapet anti-retour piloté (100) passant. L'huile fournie par la centrale hydraulique (8') du véhicule-moteur (8) entre alors dans la chambre (101) du premier vérin (88) et repousse le piston (115) de celui-ci de sorte à provoquer la sortie de sa tige (92). Ce faisant, l'huile contenue dans la chambre annulaire (102) du vérin (88) est chassée dans la chambre annulaire (106) du deuxième vérin (68) provoquant la rentrée de la tige (116) de ce dernier. La sortie de la tige (92) du premier vérin (88) provoque la déformation de la structure déformable (22) de telle sorte que la poutre-support (14) et le groupe de fauche (2) qu'elle supporte, se déplacent vers l'axe médian (62) du véhicule-moteur (8). Simultanément, la rentrée de la tige (116) du vérin (68) provoque le pivotement du groupe de fauche (2) vers le haut autour de l'axe géométrique (5) de l'articulation (4). Le pivotement est stoppé lorsque le groupe de fauche (2) occupe au moins sensiblement une position verticale. Cette position est définie par le doigt (110) qui bute sur une butée (117) solidaire de la poutre-support (14). Comme dit ci-avant, cette position est aussi verrouillée au moyen du loquet (108) qui collabore avec doigt (110). Il convient de faire observer que l'arrêt du pivotement du groupe de fauche (2) provoque également l'arrêt de la déformation de la structure déformable (22).

La largeur hors-tout (83) de l'ensemble véhicule - moteur (8)/faucheuse (1) est ainsi réduite.

En sus, comme le premier organe de liaison (15) est plus long que le second organe de liaison (17) et qu'en position de travail il est fortement incliné en direction du côté où s'étend le groupe de fauche (2), le groupe de fauche (2) s'éloigne de la roue (66) du véhicule-moteur (8) lors du pivotement du groupe de fauche (2) en position de transport, de telle sorte que le dispositif de protection (64) puisse s'étendre au moins partiellement dans le sillage de cette roue (66).

Durant le transport, le distributeur de la centrale hydraulique (8′) du véhicule-moteur (8) n'est plus actionné et se trouve en position fermée. L'huile contenue dans la conduite (103) n'est donc plus en pression. Parallélement, le groupe de fauche (2) est maintenu dans sa position dirigé vers le haut, d'une part, par la butée (117) et, d'autre part, par le loquet (108) qui collaborent avec le doigt (110). L'huile contenue dans la conduite (104) n'est donc pas non plus sous pression. En conséquence, le clapet anti-retour piloté (99) du clapet anti-retour double piloté (96) est fermé. Si la conduite flexible (103) devenait subitement défectueuse pendant le transport, le vérin (88) ne pourrait pas bouger étant donné que le clapet (99) empêche l'huile de sortir de celui-ci. Il y a lieu de noter qu'il n'y a aucun risque que la petite conduite (97) liant le clapet anti-retour (99) du clapet anti-retour double piloté (96) au vérin (88) ne devienne défectueuse étant donné qu'elle est rigide. Ce clapet anti-retour piloté (99), de même que le loquet (108) et la butée (117) qui immobilisent le groupe de fauche (2) dans la position de transport, constituent donc un organe de sécurité qui évite qu'au transport la structure (22) ne se déforme subitement par suite de la rupture de la conduite flexible (103).

Pour amener le groupe de fauche (2) en position de travail, il suffira d'actionner le distributeur de la centrale hydraulique (8') du véhicule-moteur (8) pour permettre à l'huile de retourner au réservoir du véhicule - moteur (8), et de tirer sur l'organe de traction (111) pour désolidariser le loquet (108) du doigt (110). Ce faisant, la butée (113) se détend et amorce le mouvement de pivotement du groupe de fauche (2) vers le bas autour de l'axe géométrique (5) de l'articulation (4). Ce mouvement se poursuit ensuite sous l'effet du poids du groupe de fauche (2). Ce faisant, le groupe de fauche (2) tire sur la tige (116) du deuxième vérin (68), ce qui a pour effet de faire monter en pression l'huile contenue dans la chambre annulaire (106) de ce dernier, ainsi que dans la conduite (104). Lorsque cette pression atteint une certaine valeur, le clapet anti-retour piloté (99) devient passant. L'huile contenue dans la chambre annulaire (106) du deuxième vérin (68) est alors chassée dans la chambre annulaire (102) du premier vérin (88) et repousse le piston (115) de celui-ci, étant donné que l'huile contenue dans la chambre (101) dudit vérin (88) peut retourner au réservoir du véhicule - moteur (8). Ceci entraîne la rentrée de la tige (92) du premier vérin (88) et provoque la déformation de la structure déformable (22) de telle sorte que la poutre-support (14) et le groupe de fauche (2) qu'elle supporte, s'éloignent de l'axe médian (62) du véhicule-moteur (8).

Le pivotement du groupe de fauche (2) vers le bas est stoppé lorsque la tige (116) du deuxième vérin (68) est entièrement sortie. La aussi, l'arrêt du pivotement du groupe de fauche (2) provoque l'arrêt de la déformation de la structure déformable (22). En abaissant ensuite le dispositif d'accouplement (7) du véhicule-moteur (8), on amène le groupe de fauche (2) en contact avec le sol. En continuant d'abaisser le dispositif d'accouplement (7), la poutre-support (14) pivote autour de l'axe géométrique (38a) de l'axe (38), ce qui a pour effet de décoller le levier pivotant (70) de la face d'appui (114) du carter de renvoi (49). La descente du dispositif d'accouplement (7) sera stoppée lorsque l'axe (69) sera au moins sensiblement au milieu du trou oblong (86) du tirant (85).

Compte tenu de l'agencement du levier pivotant (70), le groupe de fauche (2) peut s'adapter aux configurations que présente le terrain à faucher sans que cela fasse rentrer la tige (116) du deuxième vérin (68).

Du reste, au cours du travail, le distributeur de la centrale hydraulique (8') du véhicule-moteur (8) n'est plus actionné. L'huile contenue dans la conduite (103) ne peut pas circuler et elle n'est pas sous pression. En conséquence, le clapet anti-retour piloté (100) n'est pas passant et empêche l'huile contenue dans la chambre annulaire (102) du premier vérin (88) de sortir. La déformation de la structure déformable (22) est donc également verrouillée au travail.

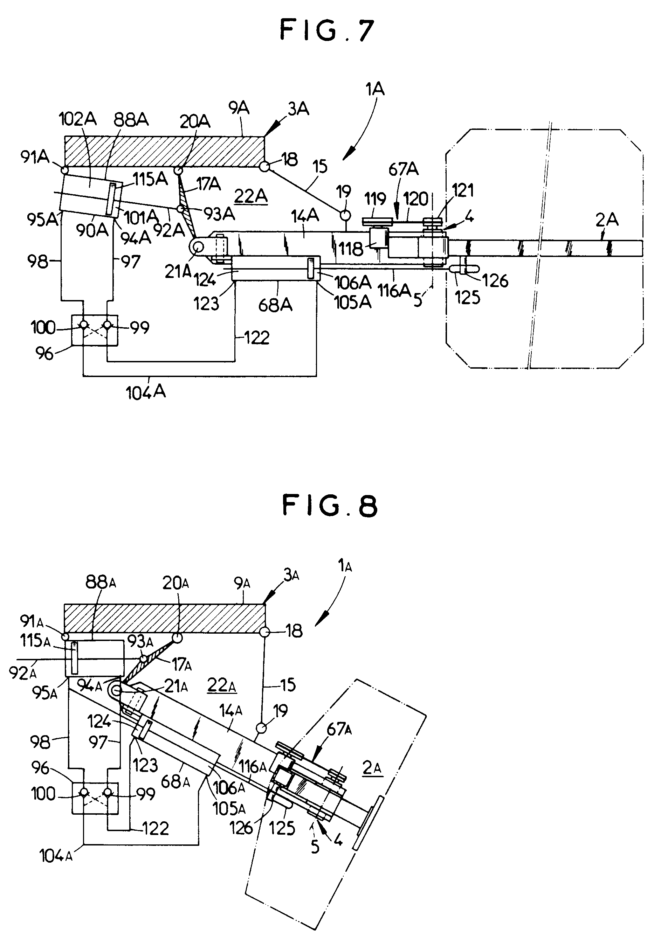

Sur les figures 7 et 8 est représenté très schématiquement un deuxième exemple de réalisation. La poutre-support (14A) est liée à l'organe d'accouplement (9A) au moyen de deux organes de liaison (15, 17A). Le premier organe de liaison (15) est lié à l'organe d'accouplement (9A), respectivement à la poutre-support (14A) au moyen de l'articulation (18), respectivement (19). Le second organe de liaison (17A) est, quant à lui, lié à l'organe d'accouplement (9A), respectivement à la poutre-support (14A), au moyen d'une articulation (20A), respectivement (21A). L'organe d'accouplement (9A), la poutre-support (14A) et les deux organes de liaison (15 et 17A) sont des composants du châssis (3A) de la faucheuse (1A).

A l'extrémité extérieure de la poutre-support (14A) est lié le groupe de fauche (2A) au moyen de l'articulation (4) d'axe géométrique (5). Tout comme dans l'exemple précédent, le groupe de fauche (2A) peut être amené dans une position de transport par pivotement autour de l'axe géométrique (5) de l'articulation (4). A cet effet, la faucheuse (1A) comporte un organe de manoeuvre (67A). Celui-ci comporte tout d'abord un élément moteur (118) (moteur hydraulique, électrique, etc... ) fixé sur la poutre-support (14A). Cet élément moteur (118) est muni d'un pignon (119) destiné à transmettre le mouvement à un organe de transmission sans fin (120) transmettant lui-même le mouvement à un autre pignon (121) lié en rotation au groupe de fauche (2A) et dont l'axe de rotation est confondu avec l'axe géométrique (5) de l'articulation (4).

La faucheuse (1A) comporte aussi un premier vérin (88A) double effet destiné à agir sur la structure déformable (22A) formée par l'organe d'accouplement (9A), la poutre-support (14A) et les deux organes de liaison (15, 17A). Ce premier vérin (88A) est lié de manière articulée d'une part à l'organe d'accouplement (9A) au moyen d'une articulation (91A) et d'autre part à l'organe de liaison (17A) au moyen d'une articulation (93A). Le vérin (88A) comporte deux orifices (94A, 95A) sur lesquels est branché un clapet anti-retour piloté double (96) à l'aide de conduites rigides (97, 98) de manière similaire à l'exemple précédent. Une conduite flexible (122) branchée sur le clapet anti-retour piloté (99) lui-même branché sur la conduite (97), est raccordée à l'orifice (123) d'un deuxième vérin (68A), tandis qu'une conduite flexible (104A) branchée sur le clapet anti-retour piloté (100) lui-même branché sur la conduite (98), est raccordée à l'orifice (105A) dudit deuxième vérin (68A). Ce deuxième vérin (68A) est donc également un vérin double effet qui est branché en circuit fermé avec le premier vérin (88A). A cet effet, la tige (92A) du premier vérin (88A) est une tige traversante de telle manière que les sections radiales des chambres (101A, 102A) soient identiques. De même, la tige (116A) du deuxième vérin (68A) est également une tige traversante pour que les sections radiales des chambres (106A, 124) soient également identiques.

A son extrémité libre, la tige (116A) du deuxième vérin (68A) est munie d'une rainure oblongue (125) qui est traversée par un axe (126) solidaire du groupe de fauche (2A). Grâce à cette liaison, le groupe de fauche (2A) peut s'adapter au relief du sol sans que cela provoque la déformation de la structure déformable (22A). Elle évite également la mise en pression de l'huile contenue dans la chambre (124) du vérin (68A) et dans la conduite (122) de telle sorte que le clapet anti-retour piloté (100) soit fermé. Ce faisant, l'huile contenue dans la chambre (102A) du premier vérin (88A) ne pourra pas sortir sous l'effet de la force engendrée lors du travail par le frottement du groupe de fauche (2A) sur le sol.

Pour amener le groupe de fauche (2A) en position de transport, on actionne l'organe de manoeuvre (67A) ce qui fait pivoter le groupe de fauche (2A) vers le haut autour de l'axe géométrique (5) de l'articulation (4). Lorsque l'axe (126) arrive en butée sur une extémité de la rainure oblongue (125), l'huile contenue dans la chambre (124) du deuxième vérin (68A) et dans la conduite (122) monte en pression et commande l'ouverture du clapet anti-retour piloté (100). Ce faisant, l'huile contenue dans la chambre (124) du deuxième vérin (68A) est transvasée dans la chambre (101A) du premier vérin (88A), tandis que l'huile contenue dans la chambre (102A) du premier vérin (88A) est transvasée dans la chambre (106A) du deuxième vérin (68A). Ceci provoque la rentrée de la tige (92A) dans le corps (90A) du premier vérin (88A) et parallèlement la déformation de la structure déformable (22A).

En position de transport (figure 8), le pivotement du groupe de fauche (2A) autour de l'axe géométique (5) de l'articulation (4) est également verrouillé d'une manière similaire à celle décrite dans l'exemple précédent. Ce faisant, l'huile contenue dans la chambre (106A) du deuxième vérin (68A) et dans la conduite (104A) n'est pas en pression. Le clapet anti-retour piloté (99) est fermé de telle sorte que l'huile contenue dans la chambre (101A) du premier vérin (88A) ne peut pas sortir, même si la conduite flexible (122) devenait subitement défectueuse.

Pour amener le groupe de fauche (2A) en position de travail, on déverrouille le groupe de fauche (2A), puis on actionne l'organe de manoeuvre (67A) de telle sorte à faire pivoter le groupe de fauche (2A) vers le bas autour de l'axe géométrique (5) de l'articulation (4). Lorsque l'axe (126) arrive en butée sur l'autre extrémité de la rainure oblongue (125), l'huile contenue dans la chambre (106A) du deuxième vérin (68A) et dans la conduite (104A) monte en pression et commande l'ouverture du clapet anti-retour piloté (99). Ce faisant, l'huile contenue dans la chambre (106A) du deuxième vérin (68A) est transvasée dans la chambre (102A) du premier vérin (88A), tandis que l'huile contenue dans la chambre (101A) du premier vérin (88A) est transvasée dans la chambre (124) du deuxième vérin (68A).

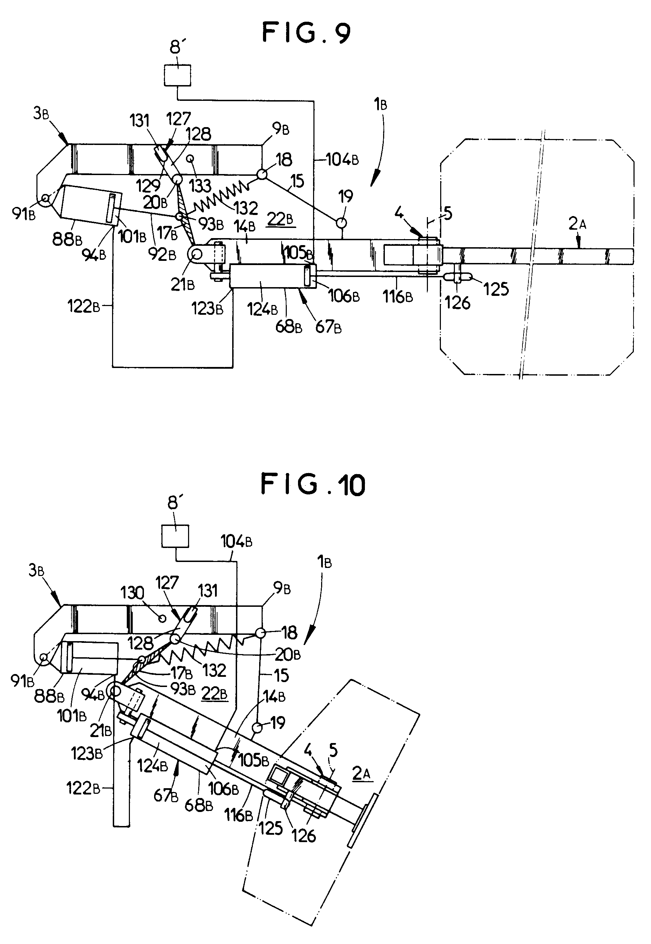

Sur les figures 9 et 10 est représenté très schématiquement un troisième exemple de réalisation. La poutre-support (14B) est liée à l'organe d'accouplement (9B) au moyen de deux organes de liaison (15, 17B). Le premier organe de liaison (15) est lié à l'organe d'accouplement (9B), respectivement à la poutre-support (14B) au moyen de l'articulation (18), respectivement (19). Le deuxième organe de liaison (17B) est, quant à lui, lié à l'organe d'accouplement (9B), respectivement à la poutre-support (14B), au moyen d'une articulation (20B), respectivement (21B). L'organe d'accouplement (9B), la poutre-support (14B) et les deux organes de liaison (15 et 17B) sont des composants du châssis (3B) de la faucheuse (1B).

La faucheuse (1B) comporte aussi un premier vérin (88B) simple effet destiné à agir sur la structure déformable (22B) formée par l'organe d'accouplement (9B), la poutre-support (14B) et les deux organes de liaison (15, 17B). Ce premier vérin (88B) est lié de manière articulée d'une part à l'organe d'accouplement (9B) au moyen d'une articulation (91B) et d'autre part à l'organe de liaison (17B) au moyen d'une articulation (93B).

A l'extrémité extérieure de la poutre-support (14B) est lié le groupe de fauche (2A) au moyen de l'articulation (4) d'axe géométrique (5). Il peut être amené en position de transport par pivotement autour de l'axe géométrique (5) de cette articulation (4). A cet effet, la faucheuse (1B) comporte un organe de manoeuvre (67B) constitué par un vérin (68B). A son extrémité libre, la tige (116B) de ce deuxième vérin (68B) est munie d'une rainure oblongue (125) qui est traversée par un axe (126) solidaire du groupe de fauche (2A). Ce deuxième vérin (68B) est un vérin double effet et comporte à cet effet deux orifices (105B, 123B). Sur l'orifice (105B) de la chambre annulaire (106B) du deuxième vérin (68B) est branchée une conduite (104B) qui est par ailleurs raccordée à la centrale hydraulique (8′) du véhicule-moteur (8). Du reste, sur l'orifice (123B) de la chambre (124B) du deuxième vérin (68B) est branchée une conduite (122B) qui est par ailleurs branchée sur l'orifice (94B) de la chambre annulaire (101B) du premier vérin (88B).

Au travail, le groupe de fauche (2A) peut, grâce à la rainure oblongue (125), s'adapter au relief du sol. La déformation de la structure déformable (22B), quant à elle, est verrouillée par un verrou mécanique (127). A cet effet, l'organe de liaison (17B) est muni d'une pièce (128) qui comporte un trou (129). L'organe d'accouplement (9B), quant à lui, présente un trou (130). Un piton de verrouillage (131) est engagé à la fois dans le trou (129) de la pièce (128) de l'organe de liaison (17B) et dans le trou (130) de l'organe d'accouplement (9B).

Pour amener le groupe de fauche (2A) en position de transport, on désengage tout d'abord le piton de verrouillage (131), puis on actionne le distributeur (non représenté) de la centrale hydraulique (8′) du véhicule-moteur (8). Ce faisant, on amène de l'huile dans la chambre annulaire (106B) du deuxième vérin (68B), tandis que l'huile contenue dans la chambre (124B) est transvasée dans la chambre annulaire (101B) du premier vérin (88B). Le remplissage de la chambre annulaire (106B) du deuxième vérin (68B) provoque la rentrée de la tige (116B) du deuxième vérin (68B) qui entraîne le groupe de fauche (2A), lorsque l'axe (126) est en butée sur l'une des extrémités de la rainure oblongue (125). Le remplissage de la chambre annulaire (101B) du premier vérin (88B) provoque, quant à lui, la rentrée de la tige (92B) qui déforme la structure déformable (22B). Ce faisant, on déforme également un organe élastiquement déformable (132) lié d'une part à l'organe d'attelage (9B) et d'autre part à l'organe de liaison (17B). Dans la position de transport, le pivotement du groupe de fauche (2A) est verrouillé d'une manière similaire à celle décrite dans le premier exemple de réalisation. La pièce (128) de l'organe de liaison (17B), quant à elle, a été amenée, lors de la déformation de la structure déformable (22B), en regard d'un trou (133) également aménagé dans l'organe d'accouplement (9B). De cette sorte, la déformation de la structure déformable (22B) peut, au transport, être verrouillée en engageant le piton de verrouillage (131) dans le trou (129) de la pièce (128) et ledit trou (133).

Pour amener le groupe de fauche (2A) de la position de transport dans la position de travail, on désengage le piton de verrouillage (131) et on déverrouille le groupe de fauche (2A). On actionne ensuite le distributeur de la centrale hydraulique (8') du véhicule-moteur (8) de sorte à permettre à l'huile contenue dans la chambre annulaire (106B) du deuxième vérin (68B), de retourner au réservoir de ladite centrale hydraulique (8') sous l'effet du pivotement du groupe de fauche (2A) vers le bas. Ce faisant, l'organe élastiquement déformable (132) se détend et déforme la structure déformable (22B). Simultanément, l'huile contenue dans la chambre annulaire (101B) du premier vérin (88B) est alors transvasée dans la chambre (124B) du deuxième vérin (68B).

Dans cet exemple de réalisation,le deuxième vérin (68B) constitue entre autre, comme dit plus haut, l'organe de manoeuvre (67B) servant à faire pivoter le groupe de fauche (2A) autour de l'axe (5) de l'articulation (4). Toutefois, il pourrait être prévu que ce pivotement soit réalisé par un organe de manoeuvre similaire à l'organe de manoeuvre (67A). Dans ce cas, le deuxième vérin pourrait être un vérin simple effet lié en série avec le premier vérin (88B). Cela se traduirait, dans l'exemple des figures 9 et 10, par la suppression de la conduite (104B).

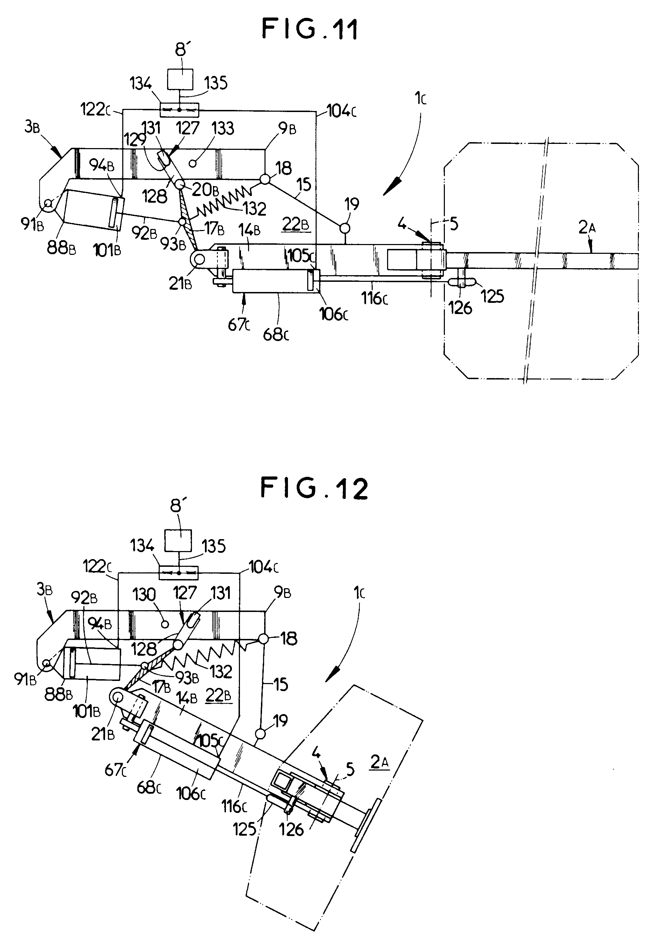

Les figures 11 et 12 montrent très schématiquement un quatrième exemple de réalisation. Ce dernier présente de nombreuses similitudes avec l'exemple de réalisation précédent, sauf en ce qui concerne le deuxième vérin (68C) et la liaison hydraulique entre celui-ci et le premier vérin (88B).

Le premier vérin (88B) est un vérin simple effet sur l'orifice (94B) de la chambre annulaire (101B) duquel est branchée une conduite (122C).

Le deuxième vérin (68C) est également un vérin simple effet sur l'orifice (105C) de la chambre annulaire (106C) duquel est branchée une conduite (104C).

La conduite (122C) alimentant le premier vérin (88B) et la conduite (104C) alimentant le deuxième vérin (68C) sont branchées sur un diviseur de débit (134), lui-même alimenté par la centrale hydraulique (8′) du véhicule-moteur (8) au moyen d'une conduite (135).

Pour amener le groupe de fauche (2A) en position de transport, on désengage tout d'abord le piton de verrouillage (131), puis on actionne le distributeur (non représenté) de la centrale hydraulique (8′) du véhicule-moteur (8). Ce faisant, on amène l'huile d'une part dans la chambre annulaire (101B) du premier vérin (88B) et d'autre part dans la chambre annulaire (106C) du deuxième vérin (68C). Le remplissage de la chambre annulaire (106C) du deuxième vérin (68C) provoque la rentrée de la tige (116C) du deuxième vérin (68C) (organe de manoeuvre (67C)) qui entraîne le groupe de fauche (2A) lorsque l'axe (126) est en butée sur l'une des extrémités de la rainure oblongue (125). Le remplissage de la chambre annulaire (101B) du premier vérin (88B) provoque, quant à lui, la rentrée de la tige (92B) qui déforme la structure déformable (22B). Ce faisant, on déforme également l'organe élastiquement déformable (132) lié d'une part à l'organe d'accouplement (9B) et d'autre part à l'organe de liaison (17B). Dans la position de transport, le pivotement du groupe de fauche (2A) est verrouillé d'une manière similaire à celle décrite dans le premier exemple de réalisation. La pièce (128) de l'organe de liaison (17B), quant à elle, a été amenée, lors de la déformation de la structure déformable (22B) en regard du trou (133) également aménagé dans l'organe d'accouplement (9B). De cette sorte, la déformation de la structure déformable (22B) peut, au transport, être verrouillée en engageant le piton de verrouillage (131) dans le trou (129) de la pièce (128) et ledit trou (133).

Pour amener le groupe de fauche (2A) de la position de transport dans la position de travail, on désengage le piton de verrouillage (131) et on déverrouille le groupe de fauche (2A). On actionne ensuite le distributeur de la centrale hydraulique (8′) du véhicule-moteur (8) de sorte à permettre à l'huile contenue dans la chambre annulaire (106C) du deuxième vérin (68C), de retourner au réservoir de ladite centrale hydraulique (8′) sous l'effet du pivotement du groupe de fauche (2A) vers le bas. L'organe élastiquement déformable (132) quant à lui, se détend et déforme la structure déformable (22B). L'huile contenue dans la chambre annulaire (101B) du premier vérin (88B) retourne alors également au réservoir de la centrale hydraulique (8′).

Alors que dans ces exemples de réalisation, la faucheuse (1 ; 1A ; 1B ; 1C) ne comporte qu'un seul groupe de fauche (2 ; 2A) s'étendant d'un côté du véhicule-moteur (8), on comprendra que l'invention s'applique également à une faucheuse qui comprendrait deux groupes de fauche (2 ; 2A) s'étendant chacun d'un côté respectif du véhicule-moteur (8). Dans un tel agencement, le châssis (3 ; 3A ; 3B) comprendra, de manière préférentielle, pour chaque groupe de fauche (2 ; 2A), une poutre-support (14 ; 14A ; 14B) et deux organes de liaison (15, 17 ; 15, 17A ; 15, 17B) propres. L'organe d'accouplement (9 ; 9A ; 9B), quant à lui, pourra être commun aux deux groupes de fauche (2 ; 2A). Mais il est également envisageable qu'à chaque groupe de fauche (2 ; 2A) soit associé un élément d'accouplement sur lequel sont articulés les deux organes de liaison (15, 17 ; 15, 17A ; 15, 17B) associés audit groupe de fauche (2 ; 2A) et que les deux éléments d'accouplement soient liés à un organe commun d'accouplement, lui-même destiné à être lié au dispositif d'accouplement (7) d'un véhicule-moteur (8).

Du reste dans les exemples décrits, il s'agit d'une faucheuse destinée à être liée au dispositif d'accouplement arrière d'un véhicule-moteur (8). On comprendra cependant que l'invention peut également s'appliquer à une faucheuse liée par exemple au dispositif d'accouplement frontal d'un véhicule-moteur.

On comprendra encore que les différents enseignements donnés par les exemples de réalisation décrits peuvent le cas échéant être combinés entre eux.

On comprendra enfin que diverses modifications peuvent être apportées aux exemples de réalisation décrits sans qu'on sorte pour autant du domaine de protection tel que défini dans les revendications.

## Revendications

1. Faucheuse (1A) destinée à être accouplée à un véhicule moteur (8) et comportant :
- un châssis (3A),
- au moins un groupe de fauche (2A) lié audit châssis (3A) au moyen d'une articulation (4),
et
- un organe de manoeuvre (67A) associé audit groupe de fauche (2A) et prévu pour déplacer celui-ci d'une position de travail où il s'étend pour l'essentiel latéralement à la voie du véhicule moteur (8) et transversalement à la direction d'avance (6) au travail, dans une position de transport où il s'étend vers le haut, par pivotement autour de l'axe (5) de ladite articulation (4),
ledit châssis (3A) comprenant :
- un organe d'accouplement (9A) permettant d'accoupler la faucheuse (1A) au véhicule moteur (8),
- une poutre-support (14A) associée audit groupe de fauche (2A) et à l'extrémité extérieure de laquelle ce dernier est lié au moyen de ladite articulation (4),
- deux organes de liaison (15, 17A) associés audit groupe de fauche (2A) et liés chacun à l'organe d'accouplement (9A) au moyen d'une première articulation (18, 20A) et à la poutre-support (14A) correspondante au moyen d'une deuxième articulation (19, 21A)
et
- un dispositif de commande (88A, 68A) agissant sur la structure déformable (22A) formée par l'organe d'accouplement (9A), ladite poutre-support (14A) et lesdits deux organes de liaison (15, 17A), pour déformer celle-ci de telle manière que pour le transport le groupe de fauche (2A) puisse en sus être déplacé transversalement vers l'axe médian (62) du véhicule moteur (8), et vice-versa,
caractérisée par le fait que le dispositif de commande (88A, 68A) comporte un premier vérin hydraulique (88A) agissant directement ou indirectement sur la structure déformable (22A) et étant en liaison hydraulique avec un deuxième vérin hydraulique (68A) lié d'une part directement ou indirectement au groupe de fauche (2A) et d'autre part à la poutre support (14A), et dont la longueur varie proportionnellement au pivotement dudit groupe de fauche (2A) autour de l'axe (5) de l'articulation (4).

2. Faucheuse (1 ; 1B ; 1C) destinée à être accouplée à un véhicule moteur (8) et comportant :
- un châssis (3 ; 3B),
- au moins un groupe de fauche (2 ; 2A) lié audit châssis (3 ; 3B) au moyen d'une articulation (4),
et
- un organe de manoeuvre (67, 67B, 67C) formé par un deuxième vérin hydraulique (68, 68B, 68C) associé audit groupe de fauche (2 ; 2A) et prévu pour déplacer celui-ci d'une position de travail où il s'étend pour l'essentiel latéralement à la voie du véhicule moteur (8) et transversalement à la direction d'avance (6) au travail, dans une position de transport où il s'étend vers le haut, par pivotement autour de l'axe (5) de ladite articulation (4), ledit deuxième vérin hydraulique (68, 68B, 68C) étant lié d'une part directement ou indirectement au groupe de fauche (2 ; 2A) et d'autre part à une poutre support (14, 14B), et sa longueur variant proportionnellement au pivotement dudit groupe de fauche (2 ; 2A) autour de l'axe (5) de l'articulation (4),
ledit châssis (3 ; 3B) comprenant :
- un organe d'accouplement (9 ; 9B) permettant d'accoupler la faucheuse (1 ; 1B ; 1C) au véhicule moteur (8),
- ladite poutre-support (14 ; 14B) associée audit groupe de fauche (2 ; 2A) et à l'extrémité extérieure de laquelle ce dernier est lié au moyen de ladite articulation (4),
- deux organes de liaison (15, 17 ; 15, 17B) associés audit groupe de fauche (2 ; 2A) et liés chacun à l'organe d'accouplement (9 ; 9B) au moyen d'une première articulation (18, 20 ; 18, 20B) et à la poutre-support (14 ; 14B) correspondante au moyen d'une deuxième articulation (19, 21 ; 19, 21B)
et
- un dispositif de commande (88 ; 88B, 132, 68B ; 88B, 132) agissant sur la structure déformable (22 ; 22B) formée par l'organe d'accouplement (9 ; 9B), ladite poutre-support (14 ; 14B) et lesdits deux organes de liaison (15, 17 ; 15, 17B), pour déformer celle-ci de telle manière que pour le transport le groupe de fauche (2 ; 2A) puisse en sus être déplacé transversalement vers l'axe médian (62) du véhicule moteur (8), et vice versa,
caractérisée par le fait que le dispositif de commande (88 ; 88B, 132, 68B ; 88B, 132) comporte un premier vérin hydraulique (88 ; 88B) agissant directement ou indirectement sur la structure déformable (22 ; 22B) et étant en liaison hydraulique avec le deuxième vérin hydraulique (68, 68B, 68C).

3. Faucheuse selon la revendication 1 ou 2, caractérisée par le fait que le premier vérin (88 ; 88A ; 88B) est branché en série avec le deuxième vérin (68 ; 68A ; 68B).

4. Faucheuse selon la revendication 3, caractérisée par le fait que le premier vérin (88 ; 88A) est un vérin double effet.

5. Faucheuse selon la revendication 4 dans sa dépendance à la revendication 2, caractérisée par le fait que le deuxième vérin (68) est un vérin simple effet et que l'une (101) des chambres (101, 102) du premier vérin (88) est reliée à une source hydraulique sous pression (8').

6. Faucheuse selon la revendication 4 dans sa dépendance à la revendication 1, caractérisée par le fait que le deuxième vérin (68A) est un vérin double effet, le premier vérin (88A) et le deuxième vérin (68A) étant branchés en circuit fermé.

7. Faucheuse selon la revendication 3, caractérisée par le fait que le premier vérin (88B) est un vérin simple effet, agissant sur la structure déformable (22B) dans un sens, et qu'un moyen de commande (132) est prévu pour agir sur ladite structure déformable (22B) dans l'autre sens.

8. Faucheuse selon la revendication 7 dans sa dépendance à la revendication 1, caractérisée par le fait que le deuxième vérin est un vérin simple effet branché en circuit fermé avec le premier vérin (88B).

9. Faucheuse selon la revendication 7 dans sa dépendance à la revendication 2, caractérisée par le fait que le deuxième vérin (68B) est un vérin double effet dont l'une (106B) des chambres (106B, 124B) est reliée à une source hydraulique sous pression (8').

10. Faucheuse selon l'une au moins des revendications 7 à 9, caractérisée par le fait que le moyen de commande est constitué par un organe élastiquement déformable (132).

11. Faucheuse selon la revendication 2, caractérisée par le fait que le deuxième vérin (68C) est un vérin simple effet, que le premier vérin (88B) est également un vérin simple effet qui est branché en parallèle avec le deuxième vérin (68C) et qui agit sur la structure déformable (22B) dans un sens, et qu'un moyen de commande (132) est prévu pour agir sur ladite structure déformable (22B) dans l'autre sens.

12. Faucheuse selon la revendication 11, caractérisée par le fait que le moyen de commande est constitué par un organe élastiquement déformable (132).

13. Faucheuse selon la revendication 11 ou 12, caractérisée par le fait que les deux vérins (88B et 68C) sont branchés sur une source hydraulique sous pression (8') au travers d'un diviseur de débit (134).

14. Faucheuse selon l'une au moins des revendications 1 à 13, caractérisée par le fait que le deuxième vérin (68 ; 68A ; 68B ; 68C) est lié au groupe de fauche (2 ; 2A) au moyen d'un élément de liaison (70 ; 125) permettant, au travail, un certain pivotement du groupe de fauche (2 ; 2A) autour de l'articulation (4) liant celui-ci à la poutre-support (14 ; 14A ; 14B), sans influence sur la déformation de la structure déformable (22 ; 22A ; 22B).

15. Faucheuse selon l'une au moins des revendications 1 a 14, caractérisée par le fait qu'en position de travail, la déformation de la structure déformable (22 ; 22A ; 22B) est verrouillée positivement par un premier organe de verrouillage (100 ; 127).

16. Faucheuse selon la revendication 15, caractérisée par le fait que le premier organe de verrouillage est constitué par un clapet anti-retour (100) qui empêche l'huile de sortir de la chambre sous pression (102 ; 102A) du premier vérin (88 ; 88A) et dont l'action peut être annulée.

17. Faucheuse selon la revendication 16, prise en combinaison avec l'une des revendications 4, 5 ou 6, caractérisée par le fait que le clapet anti-retour (100) est un clapet anti-retour piloté par la pression régnant dans la conduite (103, 97 ; 122, 97) branchée sur l'autre chambre (101 ; 101A) du premier vérin (88 ; 88A).

18. Faucheuse selon l'une au moins des revendications 1 à 17, caractérisée par le fait qu'en position de transport, la déformation de la structure déformable (22 ; 22A ; 22B) est verrouillée positivement par un deuxième organe de verrouillage (99, 107 ; 127).

19. Faucheuse selon la revendication 18, caractérisée par le fait que le deuxième organe de verrouillage (99, 107) agit sur la conduite (103, 97 ; 122, 97) branchée sur la chambre (101 ; 101A) du premier vérin (88 ; 88A) qui est pleine au transport, de sorte à empêcher, au transport, l'huile de sortir de ladite chambre (101 ; 101A), l'action de ce deuxième organe de verrouillage (99, 107) pouvant être annulée.

20. Faucheuse selon la revendication 19 prise en combinaison avec la revendication 4, 5 ou 6, caractérisée par le fait que le deuxième organe de verrouillage (99, 107) comporte d'une part un clapet anti-retour (99) sur la conduite (103, 97 ; 122, 97) branchée sur la chambre (101; 101A) du premier vérin (88 ; 88A) qui est pleine au transport, l'ouverture dudit clapet anti-retour (99) étant pilotée par la pression régnant dans la conduite (104, 98 ; 104A, 98) branchée sur l'autre chambre (102 ; 102A) du premier vérin (88 ; 88A), et d'autre part un verrou mécanique (108) verrouillant le pivotement du groupe de fauche (2 ; 2A) par rapport à la poutre-support (14 ; 14A) lorsque celui-ci est en position de transport.

21. Faucheuse selon la revendication 5 ou 11, caractérisée par le fait qu'un organe élastiquement déformable (112) amorce le mouvement de descente du groupe de fauche (2 ; 2A) lors du passage de la position de transport dans la position de travail.

22. Faucheuse selon l'une au moins des revendications 1 à 21, caractérisée par le fait que le premier vérin (88 ; 88A ; 88B) s'étend entre l'organe d'accouplement (9 ; 9A ; 9B), et l'un (17 ; 17A ; 17B) des organes de liaison (15, 17 ; 15, 17A; 15, 17B).

23. Faucheuse selon la revendication 22, caractérisée par le fait que l'un (17 ; 17A ; 17B) des organes de liaison (15, 17 ; 15, 17A ; 15, 17B) constitue l'organe-support par l'intermédiaire duquel l'organe d'accouplement (9 ; 9A ; 9B) supporte la poutre-support (14 ; 14A ; 14B) et le groupe de fauche (2 ; 2A), que l'autre organe de liaison (15) est réalisé sous forme d'organe de déclenchement et que le premier vérin (88 ; 88A ; 88B) est lié d'une part à l'organe d'accouplement (9 ; 9A ; 9B) et d'autre part à l'organe-support (17 ; 17A ; 17B).

24. Faucheuse selon la revendication 23, caractérisée par le fait que l'organe-support (17 ; 17A ; 17B) est lié à l'extrémité de la poutre-support (14 ; 14A ; 14B) opposée à celle où est lié le groupe de fauche (2 ; 2A) et que l'autre organe de liaison (15) s'étend dans une zone entre ledit organe-support (17 ; 17A ; 17B) et le groupe de fauche (2 ; 2A) et est formé par un tirant de sécurité dont la longueur est susceptible d'augmenter à partir d'un certain effort de traction appliqué à ses extrémités.

## Claims

1. A mower (1A) intended to be coupled to a motor vehicle (8) and comprising:
- a frame (3A)
- at least one mower group (2A) connected to the said frame (3A) by means of an articulation (4),
and
- a manoeuvring element (67A) associated with the said mower group (2A) and provided in order to move the latter from a working position where it extends essentially laterally to the path of the motor vehicle (8) and transversely to the direction of advance (6) during work into a transport position where it extends upwards, by pivoting around the axis (5) of the said articulation (4),
the said frame (3A) having:
- a coupling element (9A) permitting the mower (1A) to be coupled to the motor vehicle (8),
- a support beam (14A) associated with the said mower group (2A) and to the (4),
- two connecting elements (15, 17A) associated with the said mower group (2A) and each connected to the coupling element (9A) by means of a first articulation (18, 20A) and to the corresponding support beam (14A) by means of a second articulation (19, 21A)
and
- a control device (88A, 68A) acting on the deformable structure (22A) formed by the coupling element (9A), the said support beam (14A) and the said two connecting elements (15, 17A), in order to deform the said deformable structure (22A) in such a way that for transport the mower group (2A) may in addition be displaced transversely towards the median axis (62) of the motor vehicle (8), and vice versa,
characterised in that the control device (88A, 68A) comprises a first hydraulic jack (88A) acting directly or indirectly on the deformable structure (22A) and being hydraulically connected with a second hydraulic jack (68A) connected on the one hand directly or indirectly to the mower group (2A) and on the other hand to the support beam (14A), and whose length varies proportionally to the pivoting of the said mower group (2A) around the axis (5) of the articulation (4).

2. A mower (1; 1B; 1C) intended to be coupled to a motor vehicle (8) and comprising:
- a frame (3; 3B),
- at least one mower group (2; 2A) connected to the said frame (3; 3B) by means of an articulation (4),
and
- a manoeuvring element (67; 67B; 67C) formed by a second hydraulic jack (68; 68B; 68C) associated with the said mower group (2; 2A) and provided to move the latter from a working position where it extends essentially laterally to the path of the motor vehicle (8) and transversely to the direction of advance (6) during work, into a transport position where it extends upwards, by pivoting around the axis (5) of the said articulation (4), the said second hydraulic jack (68; 68B; 68C) being connected on the one hand directly or indirectly to the mower group (2; 2A) and on the other hand to a support beam (14; 14B), and its length varying proportionally to the pivoting of the said mower group (2; 2A) around the axis (5) of the articulation (4),
the said frame (3; 3B) having:
- a coupling element (9; 9B) permitting the mower (1; 1B; 1C) to be coupled to the motor vehicle (8),
- the said support beam (14; 14B) associated with the said mower group (2; 2A) and to the outer end of which this latter is connected by means of the said articulation (4),
- two connecting elements (15, 17; 15, 17B) associated with the said mower group (2; 2A) and each connected to the coupling element (9; 9B) by means of a first articulation (18, 20; 18, 20B) and to the corresponding support beam (14; 14B) by means of a second articulation (19, 21; 19, 21B)
and
- a control device (88; 88B, 132, 68B; 88B, 132) acting on the deformable structure (22; 22B) formed by the coupling element (9; 9B), the said support beam (14; 14B) and the said two connecting elements (15, 17; 15, 17B), in order to deform the said deformable structure (22; 22B) in such a way that for transport the mower group (2; 2A) may in addition be displaced transversely towards the median axis (62) of the motor vehicle (8), and vice versa,
characterised in that the control device (88; 88B, 132, 68B; 88B, 132) comprises a first hydraulic jack (88; 88B) acting directly or indirectly on the deformable structure (22; 22B) and being hydraulically connected with the second hydraulic jack (68; 68B; 68C).

3. A mower in accordance with claim 1 or 2, characterised in that the first jack (88; 88A; 88B) is connected in series with the second jack (68; 68A; 68B).

4. A mower in accordance with claim 3, characterised in that the first jack (88; 88A) is a double acting jack.

5. A mower in accordance with claim 4 as dependant on claim 2, characterised in that the second jack (68) is a single acting jack and in that one (101) of the chambers (101, 102) of the first jack (88) is connected to a hydraulic source (8').

6. A mower in accordance with claim 4 as dependant on claim 1, characterised in that the second jack (68A) is a double acting jack, the first jack (88A) and the second jack (68A) being connected in closed circuit.

7. A mower in accordance with claim 3, characterised in that the first jack (88B) is a single acting jack, acting on the deformable structure (22B) in one direction, and in that control means (132) are provided in order to act on the said deformable structure (22B) in the other direction.

8. A mower in accordance with claim 7 as dependant on claim 1, characterised in that the second jack is a single acting jack connected in closed circuit with the first jack (88B).

9. A mower in accordance with claim 7 as dependant on claim 2, characterised in that the second jack (68B) is a double acting jack of which one (106B) of the chambers (106B, 124B) is connected to a hydraulic source (8').

10. A mower in accordance with one at least of claims 7 to 9, characterised in that the control means are made up by an elastically deformable element (132).

11. A mower in accordance with claim 2, characterised in that the second jack (68C) is a single acting jack, in that the first jack (88B) is also a single acting jack which is connected in parallel with the second jack (68C) and which acts on the deformable structure (22B) in one direction, and in that control means (132) are provided in order to act on the said deformable structure (22B) in the other direction.

12. A mower in accordance with claim 11, characterised in that the control means are made up by an elastically deformable element (132).

13. A mower in accordance with claim 11 or 12, characterised in that the two jacks (88B and 68C) are connected to a hydraulic source (8') through a flow divider (134).

14. A mower in accordance with one at least of claims 1 to 13, characterised in that the second jack (68; 68A; 68B; 68C) is connected to the mower group (2; 2A) by means of a connecting element (70; 125) allowing, during work, a certain pivoting of the mower group (2; 2A) about the articulation (4) connecting the latter to the support beam (14; 14A; 14B), without influencing the deformation of the deformable structure (22; 22A; 22B).

15. A mower in accordance with one at least of claims 1 to 14, characterised in that in the working position, the deformation of the deformable structure (22; 22A; 22B) is positively locked by a first locking element (100; 127).

16. A mower in accordance with claim 15, characterised in that the first locking element is made up from a nonreturn valve (100) which prevents the oil from leaving the pressurized chamber (102; 102A) of the first jack (88; 88A) and whose action may be cancelled.

17. A mower in accordance with claim 16, taken in combination with one of claims 4, 5 or 6, characterised in that the nonreturn valve (100) is a nonreturn valve controlled by the pressure prevailing into the pipe (103, 97; 122, 97) connected onto the other chamber (101; 101A) of the first jack (88; 88A).

18. A mower in accordance with one at least of claims 1 to 17, characterised in that in the transport position, the deformation of the deformable structure (22; 22A; 22B) is positively locked by a second locking element (99, 107; 127).

19. A mower in accordance with claim 18, characterised in that the second locking element (99, 107) acts on the pipe (103, 97; 122, 97) connected onto the chamber (101; 101A) of the first jack (88; 88A) which is full during transport, so as to prevent, during transport, the oil from leaving the said chamber (101; 101A), the action of this second locking element (99, 107) being able to be cancelled.

20. A mower in accordance with claim 19 taken in combination with claim 4, 5 or 6, characterised in that the second locking element (99, 107) comprises on the one hand a nonreturn valve (99) on the pipe (103, 97; 122, 97) connected onto the chamber (101; 101A) of the first jack (88; 88A) which is full during transport, the opening of the said nonreturn valve (99) being controlled by the pressure prevailing in the pipe (104, 98; 104A, 98) connected onto the other chamber (102; 102A) of the first jack (88; 88A), and on the other hand a mechanical lock (108) locking the pivoting of the mower group (2; 2A) in relation to the support beam (14; 14A) when the said mower group (2; 2A) is in the transport position.

21. A mower in accordance with claim 5 or 11, characterised in that an elastically deformable element (112) initiates the descending movement of the mower group (2; 2A) when passing from the transport position into the working position.

22. A mower in accordance with one at least of claims 1 to 21, characterised in that the first jack (88; 88A; 88B) extends between the coupling element (9; 9A; 9B), and one (17; 17A; 17B) of the connecting elements (15, 17; 15, 17A; 15, 17B).

23. A mower in accordance with claim 22, characterised in that one (17; 17A; 17B) of the connecting elements (15, 17; 15, 17A; 15, 17B) constitutes the support element by means of which the coupling element (9; 9A; 9B) supports the support beam (14; 14A; 14B) and the mower group (2; 2A), in that the other connecting element (15) is made in the form of a release device and in that the first jack (88; 88A; 88B) is connected on the one hand to the coupling element (9; 9A; 9B) and on the other hand to the support element (17; 17A; 17B).

24. A mower in accordance with claim 23, characterised in that the support element (17; 17A; 17B) is connected to the end of the support beam (14; 14A; 14B) opposite that where the mower group (2; 2A) is connected and in that the other connecting element (15) extends into the zone between the said support element (17; 17A; 17B) and the mower group (2; 2A) and is formed by a safety tie rod whose length may be increased by a certain amount of tractive force applied to its ends.

## Patentansprüche

1. Mähmaschine (1A), die an ein Motorfahrzeug (8) ankuppelbar ist und die
- ein Gestell (3A),
- zumindest eine Mähergruppe (2A), die mit dem Gestell (3A) mittels eines Gelenks (4) verbunden ist,
und
- ein der Mähergruppe (2A) zugeordnetes Betätigungsorgan (67A), das vorgesehen ist, um sie aus einer Arbeitsstellung, wo sie sich im wesentlichen seitlich zur Spur des Motorfahrzeugs (8) und quer zur Arbeitsvorschubrichtung (6) erstreckt, in eine Transportstellung, wo sie sich nach oben erstreckt, durch Verschwenken um die Achse (5) des Gelenks (4) zu bewegen,
aufweist
welches Gestell (3A)
- ein Kupplungsorgan (9A), das das Ankuppeln der Mähmaschine (1A) an das Motorfahrzeug (8) ermöglicht,
- einen Tragbalken (14A), der der Mähergruppe (2A) zugeordnet ist und mit dessen äusserem Ende letztere mittels des Gelenks (4) verbunden ist,
- zwei der Mähergruppe (2A) zugeordnete Verbindungsorgane (15, 17A), die jeweils mit dem Kupplungsorgan (9A) mittels eines ersten Gelenks (18, 20A) und mit dem entsprechenden Tragbalken (14A) mittels eines zweiten Gelenks (19, 21A) verbunden sind,
und
- eine Steuereinrichtung (88A, 68A), die auf die aus dem Kupplungsorgan (9A), dem Tragbalken (14A) und den beiden Verbindungsorganen (15, 17A) gebildete verformbare Struktur (22A) einwirkt, um diese derart zu verformen, dass die Mähergruppe (2A) für den Transport überdies quer zur Mittelachse (62) des Motorfahrzeugs (8) versetzt werden kann und umgekehrt,
umfasst,
dadurch gekennzeichnet, dass die Steuereinrichtung (88A, 68A) einen ersten Hydraulikzylinder (88A) umfasst, der direkt oder indirekt auf die verformbare Struktur (22A) wirkt und in hydraulischer Verbindung mit einem zweiten Hydraulikzylinder (68A) ist, der einerseits direkt oder indirekt mit der Mähergruppe (2A) und anderseits mit dem Tragbalken (14A) verbunden ist und dessen Länge proportional zur Verschwenkung der Mähergruppe (2A) um die Achse (5) des Gelenks (4) variiert.

2. Mähmaschine (1; 1B; 1C), die an ein Motorfahrzeug (8) ankuppelbar ist und die
- ein Gestell (3; 3B),
- zumindest eine Mähergruppe (2; 2A), die mit dem Gestell (3; 3B) mittels eines Gelenks (4) verbunden ist,
und
- ein der Mähergruppe (2; 2A) zugeordnetes, aus einem zweiten Hydraulikzylinder (68; 68B; 68C) bestehendes Betätigungsorgan (67; 67B; 67C), das vorgesehen ist, um sie aus einer Arbeitsstellung, wo sie sich im wesentlichen seitlich zur Spur des Motorfahrzeugs (8) und quer zur Arbeitsvorschubrichtung (6) erstreckt, in eine Transportstellung, wo sie sich nach oben erstreckt, durch Verschwenken um die Achse (5) des Gelenks (4) zu bewegen, wobei der zweite Hydraulikzylinder (68; 68B; 68C) einerseits direkt oder indirekt mit der Mähergruppe (2; 2A) and anderseits mit einem Tragbalken (14; 14B) verbunden ist und seine Länge proportional zur Verschwenkung der Mähergruppe (2; 2A) um die Achse (5) des Gelenks (4) variiert,
aufweist
welches Gestell (3; 3B)
- ein Kupplungsorgan (9; 9B), das das Ankuppeln der Mähmaschine (1; 1B; 1C) an das Motorfahrzeug (8) ermöglicht,
- den Tragbalken (14; 14B), der der Mähergruppe (2; 2A) zugeordnet ist und mit dessen äusserem Ende letztere mittels des Gelenks (4) verbunden ist,
- zwei der Mähergruppe (2; 2A) zugeordnete Verbindungsorgane (15, 17; 15, 17B), die jeweils mit dem Kupplungsorgan (9; 9B) mittels eines ersten Gelenks (18, 20; 18, 20B) und mit dem entsprechenden Tragbalken (14; 14B) mittels eines zweiten Gelenks (19, 21; 19, 21B) verbunden sind,
und
- eine Steuereinrichtung (88; 88B, 132, 68B; 88B, 132), die auf die aus dem Kupplungsorgan (9; 9B), dem Tragbalken (14; 14B) und den beiden Verbindungsorganen (15, 17; 15, 17B) gebildete verformbare Struktur (22; 22B) einwirkt, um diese derart zu verformen, dass die Mähergruppe (2; 2A) für den Transport überdies quer zur Mittelachse (62) des Motorfahrzeugs (8) versetzt werden kann und umgekehrt,
umfasst,
dadurch gekennzeichnet, dass die Steuereinrichtung (88; 88B, 132, 68B; 88B, 132) einen ersten Hydraulikzylinder (88; 88B) umfasst, der direkt oder indirekt auf die verformbare Struktur (22; 22B) wirkt und in hydraulischer Verbindung mit dem zweiten Hydraulikzylinder (68; 68B; 68C) ist.

3. Mähmaschine nach Anspruch 1 oder 2, dadurch gekennzeichnet, dass der erste Hydraulikzylinder (88; 88A; 88B) in Serie mit dem zweiten Hydraulikzylinder (68; 68A; 68B) angeschlossen ist.

4. Mähmaschine nach Anspruch 3, dadurch gekennzeichnet, dass der erste Hydraulikzylinder (88; 88A) ein doppelt wirkender Zylinder ist.

5. Mähmaschine nach Anspruch 4 in Abhängigkeit von Anspruch 2, dadurch gekennzeichnet, dass der zweite Hydraulikzylinder (68) ein einfach wirkender Hydraulikzylinder ist und dass eine (101) der Kammern (101, 102) des ersten Hydraulikzylinders (88) mit einer hydraulischen Druckquelle (8') verbunden ist.

6. Mähmaschine nach Anspruch 4 in Abhängigkeit von Anspruch 1, dadurch gekennzeichnet, dass der zweite Hydraulikzylinder (68A) ein doppelt wirkender Hydraulikzylinder ist und dass der erste Hydraulikzylinder (88A) und der zweite Hydraulikzylinder (68A) im geschlossenen Kreis angeschlossen sind.

7. Mähmaschine nach Anspruch 3, dadurch gekennzeichnet, dass der erste Hydraulikzylinder (88B) ein einfach wirkender Hydraulikzylinder ist, der auf die verformbare Struktur (22B) in einer Richtung wirkt, und dass ein Steuermittel (132) vorgesehen ist, um auf die verformbare Struktur (22B) in der anderen Richtung zu wirken.

8. Mähmaschine nach Anspruch 7 in Abhängigkeit von Anspruch 1, dadurch gekennzeichnet, dass der zweite Hydraulikzylinder ein einfach wirkender Hydraulikzylinder ist, der in geschlossenem Kreis mit dem ersten Hydraulikzylinder (88B) angeschlossen ist.

9. Mähmaschine nach Anspruch 7 in Abhängigkeit von Anspruch 2, dadurch gekennzeichnet, dass der zweite Hydraulikzylinder (68B) ein doppelt wirkender Hydraulikzylinder ist, dessen eine (106B) der Kammern (106B, 124B) mit einer hydraulischen Druckquelle (8') verbunden ist.

10. Mähmaschine nach zumindest einem der Ansprüche 7 bis 9, dadurch gekennzeichnet, dass das Steuermittel aus einem elastisch verformbaren Organ (132) besteht.

11. Mähmaschine nach Anspruch 2, dadurch gekennzeichnet, dass der zweite Hydraulikzylinder (68C) ein einfach wirkender Hydraulikzylinder ist, dass der erste Hydraulikzylinder (88B) ebenfalls ein einfach wirkender Hydraulikzylinder ist, der parallel zum zweiten Zylinder (68C) angeschlossen ist und der auf die verformbare Struktur (22B) in einer Richtung wirkt, und dass ein Steuermittel (132) vorgesehen ist, das auf die verformbare Struktur (22B) in der anderen Richtung wirkt.

12. Mähmaschine nach Anspruch 11, dadurch gekennzeichnet, dass das Steuermittel aus einem elastisch verformbaren Organ (132) besteht.

13. Mähmaschine nach Anspruch 11 oder 12, dadurch gekennzeichnet, dass die beiden Hydraulikzylinder (88B und 68C) über einen Durchsatzteiler (134) an eine hydraulische Druckquelle (8') angeschlossen sind.

14. Mähmaschine nach zumindest einem der Ansprüche 1 bis 13, dadurch gekennzeichnet, dass der zweite Hydraulikzylinder (68; 68A; 68B; 68C) mit der Mähergruppe (2; 2A) mittels eines Verbindungselements (70; 125) verbunden ist, das im Betrieb eine gewisse Schwenkbewegung der Mähergruppe (2, 2A) um das sie mit dem Tragbalken (14; 14A; 14B) verbindende Gelenk (4) ohne Einfluss auf die Verformung der verformbaren Struktur (22; 22A; 22B) ermöglicht.

15. Mähmaschine nach zumindest einem der Ansprüche 1 bis 14, dadurch gekennzeichnet, dass die Verformung der verformbaren Struktur (22; 22A; 22B) durch ein erstes Verriegelungsorgan (100; 127) positiv verriegelt ist.

16. Mähmaschine nach Anspruch 15, dadurch gekennzeichnet, dass das erste Verriegelungsorgan aus einem Rückschlagventil (100) besteht, das das Öl am Austritt aus der Druckkammer (102; 102A) des ersten Hydraulikzylinders (88; 88A) hindert und dessen Wirkung ausgeschaltet werden kann.

17. Mähmaschine nach Anspruch 16 in Kombination mit einem der Ansprüche 4, 5 oder 6, dadurch gekennzeichnet, dass das Rückschlagventil (100) ein durch den in der an die andere Kammer (101; 101A) des ersten Hydraulikzylinders (88; 88A) angeschlossenen Leitung (103, 97; 122, 97) herrschenden Druck beaufschlagtes Rückschlagventil ist.

18. Mähmaschine nach zumindest einem der Ansprüche 1 bis 17, dadurch gekennzeichnet, dass die Verformung der verformbaren Struktur (22; 22A; 22B) in der Transportstellung durch ein zweites Verriegelungsorgan (99, 107; 127) positiv verriegelt ist.

19. Mähmaschine nach Anspruch 18, dadurch gekennzeichnet, dass das zweite Verriegelungsorgan (99, 107) auf die an die Kammer (101; 101A) des ersten Hydraulikzylinders (88; 88A), die beim Transport voll ist, angeschlossene Leitung (103, 97; 122, 97) wirkt, sodass das Öl beim Transport am Austritt aus der Kammer (101; 101A) gehindert wird, wobei die Wirkung dieses zweiten Verriegelungsorgans (99, 107) ausgeschaltet werden kann.

20. Mähmaschine nach Anspruch 19 in Kombination mit Anspruch 4, 5 oder 6, dadurch gekennzeichnet, dass das zweite Verriegelungsorgan (99, 107) einerseits ein Rückschlagventil (99) an der an die Kammer (101; 101A) des ersten Hydraulikzylinders (88; 88A), die beim Transport voll ist, angeschlossenen Leitung (103, 97; 122, 97), wobei die Öffnung des Rückschlagenventils (99) durch den in der an die andere Kammer (102; 102A) des ersten Hydraulikzylinders (88; 88A) angeschlossen Leitung (104, 98; 104A, 98) herrschenden Druck gesteuert wird, und anderseits einen mechanischen Riegel (108) aufweist, der die Schwenkbewegung der Mähergruppe (2; 2A) in bezug auf den Tragbalken (14; 14A) verriegelt, wenn diese in Transportstellung ist.

21. Mähmaschine nach Anspruch 5 oder 11, dadurch gekennzeichnet, dass ein elastisch verformbares Organ (112) die Absenkbewegung der Mähergruppe (2; 2A) beim Übergang von der Transportstellung in die Arbeitsstellung einleitet.

22. Mähmaschine nach zumindest einem der Ansprüche 1 bis 21, dadurch gekennzeichnet, dass sich der erste Hydraulikzylinder (88; 88A; 88B) zwischen dem Kupplungsorgan (9; 9A; 9B) und einem (17; 17A; 17B) der Verbindungsorgane (15, 17; 15, 17A; 15, 17B) befindet.

23. Mähmaschine nach Anspruch 22, dadurch gekennzeichnet, dass das eines (17; 17A; 17B) der Verbindungsorgane (15, 17; 15, 17A; 15, 17B) das Tragorgan bildet, über welches das Kupplungsorgan (9; 9A; 9B) den Tragbalken (14; 14A; 14B) und die Mähergruppe (2; 2A) trägt, dass das andere Verbindungsorgan (15) in Form eines Auslöseorgans ausgeführt ist und dass der erste Hydraulikzylinder (88; 88A; 88B) einerseits mit dem Kupplungsorgan (9, 9A; 9B) und anderseits mit dem Tragorgan (17; 17A; 17B) verbunden ist.

24. Mähmaschine nach Anspruch 23, dadurch gekennzeichnet, dass das Tragorgan (17; 17A; 17B) mit dem Ende des Tragbalkens (14; 14A; 14B) verbunden ist, das jenem gegenüberliegt, mit dem die Mähergruppe (2; 2A) verbunden ist, und dass sich das andere Verbindungsorgan (15) in einem Bereich zwischen Tragorgan (17; 17A; 17B) und Mähergruppe (2; 2A) erstreckt und von einer Sicherheitszugstange gebildet ist, deren Länge zuzunehmen vermag, sobald eine gewisse Zugkraft an ihre Enden ausgeübt wird.
